# EUROPEAN PATENT SPECIFICATION

(11) **EP 3 051 282 B1**
(45) Date of publication and mention of the grant of the patent: **06.10.2021**
(21) Application number: 16152472.3
(22) Date of filing: 22.01.2016
(51) Int. Cl.: G01N 27/407, G01N 27/419

(54) **GAS SENSOR**
GASSENSOR
CAPTEUR DE GAZ

(30) Priority: 30.01.2015 JP 2015017171
(43) Date of publication of application: 03.08.2016
(73) Proprietor: NGK Insulators, Ltd., Nagoya-city, Aichi 467-8530 (JP)
(72) Inventor: OKAMOTO, Taku, Nagoya city, Aichi 467-8530 (JP); NAKASONE, Osamu, Nagoya city, Aichi 467-8530 (JP); NAKAYAMA, Yuki, Nagoya city, Aichi 467-8530 (JP)
(74) Representative: Mewburn Ellis LLP

(56) References cited:
- EP-A1- 1 912 064
- EP-A2- 2 803 990
- JP-A- 2001 013 106
- JP-A- 2004 177 165

## Description

### BACKGROUND OF THE INVENTION

### Field of the Invention

The present invention relates to a gas sensor that detects water vapor and carbon dioxide of a measurement gas and to a method of measuring concentrations of a water vapor component and a carbon dioxide component of a measurement gas.

### Description of the Background Art

For example, in combustion control of internal combustion engines such as vehicle engines, environmental control such as exhaust gas control, or various fields including medical, biotechnology, and agriculture and industry fields, there is a need for accurately obtaining the concentration of a target gas component. Various measurement and evaluation techniques and apparatuses have conventionally been researched and studied in response to such a need.

For example, it is well known that in theory, a limiting-current type oxygen sensor can measure a water vapor concentration and a carbon dioxide concentration, as well as an oxygen concentration (for example, see Hideaki Takahashi, Keiichi Saji, Haruyoshi Kondo, "Thin-film Limiting-current Type Oxygen Sensor," Vol. 27 No. 2 pp.47-57, R&D Review of Toyota Central R&D Labs., Inc.).

The apparatus that measures carbon dioxide and water is well known, which includes two sensors each including two oxygen pumping cells and obtains a carbon dioxide concentration and a water (water vapor) concentration by an inverse matrix operation based on the pumping currents in the four pumping cells (for example, see Japanese Examined Patent Application Publication No. 06-76990 (1994)).

The carbon dioxide sensor, which has increased specificity to carbon dioxide and decreased sensitivity to water vapor, is well known (for example, see Japanese Patent Application Laid-Open No. 09-264873 (1997)).

When a carbon dioxide gas of a measurement gas is a detection target, the measurement gas often contains water vapor (water). Japanese Patent Application Laid-Open No. 09-264873 (1997) first points out such a problem that typical carbon dioxide sensors are susceptible to humidity, and then discloses that a carbon dioxide sensor having low sensitivity to water vapor has been achieved.

Unfortunately, the carbon dioxide sensor disclosed in Japanese Patent Application Laid-Open No. 09-264873 (1997) is susceptible to temperature changes of a measurement gas, because the sensor obeys the principle of mixed potential.

For a measurement gas containing water vapor and carbon dioxide, both may be expected to be measured. The apparatus disclosed in Japanese Examined Patent Application Publication No. 06-76990 (1994) enables the above-mentioned measurement in theory. However, this apparatus has yet to be put to practical use because it has a complex configuration and needs to undergo a complicated calibration process.

Other gas sensors are disclosed in EP 1912064 A1, JP 2004177165 A and EP 2803990 A2.

In particular, the exhaust gas from the internal combustion engine such as a vehicle engine contains a number of components such as oxygen, water vapor, carbon dioxide, hydrocarbon gas, and nonflammable gases, and besides, the component ratio and temperatures thereof may vary momentarily. No technique has been established which accurately obtains the concentrations of water vapor and carbon dioxide of the exhaust gas. The concentrations are difficult to measure particularly because the condition for decomposing carbon dioxide is similar to the condition for decomposing water vapor.

### SUMMARY OF THE INVENTION

The present invention relates to a gas sensor that detects water vapor and carbon dioxide of a measurement gas according to the independent claim 1.

Further aspects of the gas sensor are defined by the dependent claims 2 to 7. According to the present invention, a gas sensor, which has a sensor element formed of an oxygen-ion conductive solid electrolyte and identifies concentrations of a water vapor component and a carbon dioxide component of a measurement gas based on a current flowing through the solid electrolyte, includes: a gas inlet through which the measurement gas is introduced from the outside; a first diffusion control part that is in communication with the gas inlet and applies a first diffusion resistance to the measurement gas; a first internal space that is in communication with the first diffusion control part, into which the measurement gas is introduced with the first diffusion resistance from the outside; a second diffusion control part that is in communication with the first internal space and applies a second diffusion resistance to the measurement gas; a second internal space that is in communication with the second diffusion control part, into which the measurement gas is introduced with the second diffusion resistance from the first internal space; a main electrochemical pumping cell formed of a main internal electrode formed to face the first internal space, a first external electrode formed on an outer surface of the sensor element, and the solid electrolyte located between the main internal electrode and the first external electrode; a first measuring electrochemical pumping cell formed of a first measuring internal electrode formed to face the second internal space, a second external electrode formed on the outer surface of the sensor element, and the solid electrolyte located between the first measuring internal electrode and the second external electrode; a second measuring electrochemical pumping cell formed of a second measuring internal electrode formed at a position opposite to the second diffusion control part relative to the first measuring internal electrode in the second internal space, a third external electrode formed on the outer surface of the sensor element, and the solid electrolyte located between the second measuring internal electrode and the third external electrode; a reference gas space into which a reference gas is introduced; and a reference electrode formed to face the reference gas space. A diffusion resistance from the gas inlet to the first internal space is 370 /cm or more and 1000 /cm or less. The main electrochemical pumping cell is configured and disposed to adjust an oxygen partial pressure of the first internal space to 10⁻¹² atm (1.01325 10⁻⁷ Pa) to 10⁻³⁰ atm (1.01325 10⁻²⁵ Pa) such that substantially all of the water vapor component and the carbon dioxide component are decomposed in the first internal space. The first measuring electrochemical pumping cell is configured and disposed to adjust an oxygen partial pressure of the second internal space such that hydrogen generated by the decomposition of the water vapor component selectively burns in the second internal space and that the oxygen partial pressure of the second internal space is higher than the oxygen partial pressure of the first internal space. The second measuring electrochemical pumping cell is configured and disposed to adjust an oxygen partial pressure near a surface of the second measuring internal electrode such that carbon monoxide generated by the decomposition of the carbon dioxide component selectively burns near the surface of the second measuring internal electrode and that the oxygen partial pressure near the surface of the second measuring internal electrode is higher than the oxygen partial pressure of the second internal space. The gas sensor is configured and disposed to identify the concentration of the water vapor component contained in the measurement gas based on the magnitude of a current flowing between the first measuring internal electrode and the second external electrode when the first measuring electrochemical pumping cell supplies oxygen to the second internal space, and identify the concentration of the carbon dioxide component contained in the measurement gas based on the magnitude of a current flowing between the second measuring internal electrode and the third external electrode when the second measuring electrochemical pumping cell supplies oxygen to the surface of the second measuring internal electrode.

According to the present invention, a water vapor concentration and a carbon dioxide concentration can be obtained accurately in up to a high concentration range irrespective of whether a measurement gas contains only one of or both of a water vapor component and a carbon dioxide component.

The present invention therefore has an object to provide a gas sensor capable of accurately obtaining the concentrations of water vapor and carbon dioxide of a measurement gas containing a non-target gas component.

The present invention also relates to a method of measuring concentrations of a water vapor component and a carbon dioxide component of a measurement gas according to the independent claim 8.

Further aspects of the method are defined by the dependent claims 9 to 14.

### BRIEF DESCRIPTION OF THE DRAWINGS

FIG. 1 is a schematic cross-sectional view of the structure of a gas sensor 100;
FIG. 2 schematically shows a graph showing the functional relationship between absolute values of a water vapor detection current Ip1 and a carbon dioxide detection current Ip2 and the actual concentrations of water vapor and carbon dioxide;
FIG. 3 shows the evaluation results of water vapor sensitivity characteristics in Example 1;
FIG. 4 shows the evaluation results of water vapor sensitivity characteristics in Example 1;
FIG. 5 shows the evaluation results of carbon dioxide sensitivity characteristics in Example 1;
FIG. 6 shows the evaluation results of carbon dioxide sensitivity characteristics in Example 1; and
FIG. 7 shows the evaluations results in Example 2.

### DESCRIPTION OF THE PREFERRED EMBODIMENTS

### Outline Configuration of Gas Sensor

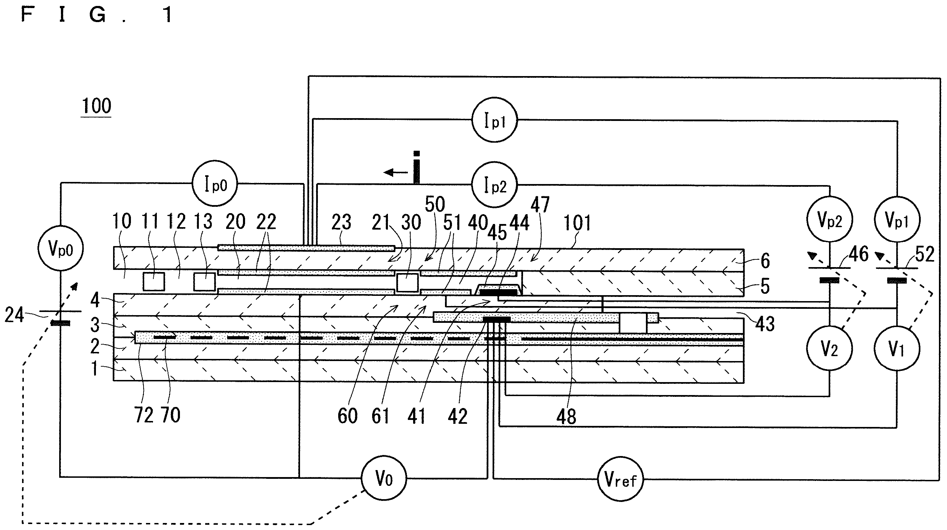

FIG. 1 is a schematic cross-sectional view of the structure of a gas sensor 100 according to an embodiment of the present invention. The gas sensor 100 according to this embodiment serves to detect water vapor (H₂O) and carbon dioxide (CO₂) and obtain the concentrations thereof. A sensor element 101 being a main part thereof includes, as a structural material, ceramic mainly composed of zirconia that is an oxygen-ion conductive solid electrolyte.

Although this embodiment will be described on the premise that a measurement gas contains water vapor and carbon dioxide, the measurement gas is not necessarily required to contain both of them.

The sensor element 101 has the structure in which six layers, namely, a first substrate layer 1, a second substrate layer 2, a third substrate layer 3, a first solid electrolyte layer 4, a spacer layer 5, and a second solid electrolyte layer 6, each formed of an oxygen-ion conductive solid electrolyte, are laminated in the stated order from the bottom side of FIG. 1.

Provided between the lower surface of the second solid electrolyte layer 6 and the upper surface of the first solid electrolyte layer 4 on one-end-portion side of the sensor element 101 are a gas inlet 10, a first diffusion control part 11, a first internal space 20, a second diffusion control part 30, and a second internal space 40. A buffer space 12 and a fourth diffusion control part 13 may be further provided between the first diffusion control part 11 and the first internal space 20. The gas inlet 10, the first diffusion control part 11, the buffer space 12, the fourth diffusion control part 13, the first internal space 20, the second diffusion control part 30, and the second internal space 40 are adjacently formed so as to communicate with each other in the stated order. The part extending from the gas inlet 10 to the second internal space 40 is referred to as a gas distribution part as well.

The gas inlet 10, the buffer space 12, the first internal space 20, and the second internal space 40 are interior spaces provided by hollowing out the spacer layer 5. The buffer space 12, the first internal space 20, and the second internal space 40 are each provided, with its upper portion defined by the lower surface of the second solid electrolyte layer 6, its lower portion defined by the upper surface of the first solid electrolyte layer 4, and its side portion defined by the side surface of the spacer layer 5.

The first diffusion control part 11, the second diffusion control part 30, and the fourth diffusion control part 13 are each provided as two horizontally long slits (which are openings longitudinally extending to be vertical to the sheet of FIG. 1).

At a position that is between the upper surface of the third substrate layer 3 and the lower surface of the spacer layer 5 and is farther from the distal-end side than the gas distribution part, a reference gas introduction space 43 is provided. The reference gas introduction space 43 is an interior space with its upper portion defined by the lower surface of the spacer layer 5, its lower portion defined by the upper surface of the third substrate layer 3, and its side portion defined by the side surface of the first solid electrolyte layer 4. For example, oxygen or air is introduced into the reference gas introduction space 43 as a reference gas.

The gas inlet 10 is a part being open to the outside. Through this gas inlet 10, a measurement gas is taken into the sensor element 101 from the outside.

The first diffusion control part 11 is a part that applies a predetermined diffusion resistance to the measurement gas taken through the gas inlet 10.

The buffer space 12 is provided to cancel concentration fluctuations of the measurement gas which are caused due to pressure fluctuations of the measurement gas in the outside (in the case where the measurement gas is a vehicle exhaust gas, pulsations of the exhaust gas pressure). The sensor element 101 does not necessarily need to include the buffer space 12.

The fourth diffusion control part 13 is a part that applies a predetermined diffusion resistance to the measurement gas introduced from the buffer space 12 into the first internal space 20. The fourth diffusion control part 13 is a part provided in association with the provision of the buffer space 12.

The first diffusion control part 11 and the first internal space 20 directly communicate with each other if the buffer space 12 and the third diffusion control part 13 are not provided.

The first internal space 20 is provided as a space for adjusting an oxygen partial pressure of the measurement gas introduced through the gas inlet 10. This oxygen partial pressure is adjusted through the operation of a main pumping cell 21.

The main pumping cell 21 is an electrochemical pumping cell (main electrochemical pumping cell) formed of a main inside pump electrode 22, an outside pump electrode 23, and the oxygen-ion conductive solid electrolyte sandwiched between these electrodes. The main inside pump electrode 22 is provided on substantially the entire upper surface of the first solid electrolyte layer 4, substantially the entire lower surface of the second solid electrolyte layer 6, and substantially the entire side surface of the spacer layer 5, those surfaces defining the first internal space 20. The outside pump electrode 23 is provided in the region corresponding to the main inside pump electrode 22 on the upper surface of the second solid electrolyte layer 6 so as to be exposed to the outside. The main inside pump electrode 22 and the outside pump electrode 23 are each formed as a porous cermet electrode rectangular in plan view (for example, a cermet electrode made of ZrO₂ and a precious metal such as Pt containing 0.1 wt% to 30.0 wt% of Au). The main inside pump electrode 22 is typically formed with an area of 0.1 mm² to 20 mm².

The main pumping cell 21 causes, upon application of a pump voltage Vp0 by a variable power source 24 provided outside the sensor element 101, a pump current Ip to flow between the outside pump electrode 23 and the main inside pump electrode 22, allowing oxygen in the first internal space 20 to be pumped out to the outside or outside oxygen to be pumped into the first internal space 20.

In the sensor element 101, the main inside pump electrode 22, a reference electrode 42 sandwiched between the upper surface of the third substrate layer 3 and the first solid electrolyte layer 4, and the oxygen-ion conductive solid electrolyte sandwiched between these electrodes constitute a first oxygen-partial-pressure detection sensor cell 60 being an electrochemical sensor cell. The reference electrode 42 is an electrode substantially rectangular in plan view, which is formed of a porous cermet similar to, for example, the outside pump electrode. Provided around the reference electrode 42 is a reference gas introduction layer 48 that is made of porous alumina and is continuous with the reference gas introduction space 43, so that the reference gas of the reference gas introduction space 43 is introduced to the surface of the reference electrode 42. In the first oxygen-partial-pressure detection sensor cell 60, an electromotive force V0 is generated between the main inside pump electrode 22 and the reference electrode 42, which results from the oxygen concentration difference between the atmosphere in the first internal space 20 and the reference gas of the reference gas introduction space 43.

The electromotive force V0 generated in the first oxygen-partial-pressure detection sensor cell 60 varies in accordance with the oxygen partial pressure in the atmosphere existing in the first internal space 20. The sensor element 101 uses this electromotive force V0 to feedback-control the variable power source 24 for the main pumping cell 21. This allows the pump voltage Vp0, which is applied to the main pumping cell 21 by the variable power source 24, to be controlled in accordance with the oxygen partial pressure in the atmosphere of the first internal space 20.

The second diffusion control part 30 is a part that applies a predetermined diffusion resistance to the measurement gas introduced from the first internal space 20 into the second internal space 40.

The second internal space 40 is provided as a space for performing the process for measuring the concentrations of water vapor and carbon dioxide of the measurement gas introduced through the second diffusion control part 30. In the second internal space 40, oxygen can be supplied from the outside through the operation of a first measuring pumping cell 50.

The first measuring pumping cell 50 is an auxiliary electrochemical pumping cell (first measuring electrochemical pumping cell) formed of a first measuring inside pump electrode 51, the outside pump electrode 23, and the oxygen-ion conductive solid electrolyte sandwiched between these electrodes. The first measuring inside pump electrode 51 is provided on substantially the entire upper surface of the first solid electrolyte layer 4, substantially the entire lower surface of the second solid electrolyte layer 6, and substantially the entire side surface of the spacer layer 5, those surfaces defining the second internal space 40. The first measuring inside pump electrode 51 is formed as a porous cermet electrode rectangular in plan view, similarly to the outside pump electrode 23 and the main inside pump electrode 22. The use of the outside pump electrode 23 is not necessarily required, and any other cermet electrode provided on the outer surface of the sensor element 101 may form the first measuring pumping cell 50, in place of the outside pump electrode 23.

The first measuring pumping cell 50 causes, upon application of a pump voltage Vp1 by a variable power source 52 provided outside the sensor element 101, a pump current (water vapor detection current) Ip1 to flow between the outside pump electrode 23 and the first measuring inside pump electrode 51, so that oxygen can be pumped into the second internal space 40 (particularly to near the surface of the first measuring inside pump electrode 51).

In the sensor element 101, the first measuring inside pump electrode 51, the reference electrode 42, and the oxygen-ion conductive solid electrolyte sandwiched between these electrodes constitute a second oxygen-partial-pressure detection sensor cell 61 being an electrochemical sensor cell. In the second oxygen-partial-pressure detection sensor cell 61, an electromotive force V1 is generated between the first measuring inside pump electrode 51 and the reference electrode 42, which results from the oxygen concentration difference between the reference gas of the reference gas introduction space 43 and the atmosphere of the second internal space 40, particularly near the surface of the first measuring inside pump electrode 51.

The electromotive force V1 generated in the second oxygen-partial-pressure detection sensor cell 61 varies in accordance with the oxygen partial pressure in the atmosphere existing near the surface of the first measuring inside pump electrode 51. The sensor element 101 uses this electromotive force V1 to feedback-control the variable power source 52 for the first measuring pumping cell 50. This allows the pump voltage Vp1, which is applied to the first measuring pumping cell 50 by the variable power source 52, to be controlled in accordance with the oxygen partial pressure of the atmosphere near the surface of the first measuring inside pump electrode 51.

The sensor element 101 further includes a second measuring pumping cell 47 and a third oxygen-partial-pressure detection sensor cell 41. The second measuring pumping cell 47 is an electrochemical sensor cell (second measuring electrochemical pumping cell) formed of the outside pump electrode 23, a second measuring inside pump electrode 44, and the oxygen-ion conductive solid electrolyte sandwiched between these electrodes. The third oxygen-partial-pressure detection sensor cell 41 is an electrochemical sensor cell formed of the second measuring inside pump electrode 44, the reference electrode 42, and the oxygen-ion conductive solid electrolyte sandwiched between these electrodes.

The second measuring inside pump electrode 44 is an electrode substantially rectangular in plan view, which is formed of a porous cermet similarly to, for example, the outside pump electrode. The second measuring inside pump electrode 44 is formed at a position opposite to the second diffusion control part 30 relative to the first measuring inside pump electrode 51, schematically, at a position farther from the second diffusion control part 30 than the first measuring inside pump electrode 51. However, the second measuring inside pump electrode 44 is covered with a third diffusion control part 45. The third diffusion control part 45 is a porous alumina layer, which is a part that applies a predetermined diffusion resistance to the measurement gas that begins to come into contact with the second measuring inside pump electrode 44 in the second internal space 40. In other words, the third diffusion control part 45, which is assumed to limit an amount of the inflammable gas that comes into contact with the second measuring inside pump electrode 44, isolates the second measuring inside pump electrode 44 from the second internal space 40. The third diffusion control part 45 also functions as an electrode protecting layer that protects the second measuring inside pump electrode 44 from, for example, particle adhesion.

In the third oxygen-partial-pressure detection sensor cell 41, an electromotive force V2 is generated between the second measuring inside pump electrode 44 and the reference electrode 42, which results from an oxygen concentration difference between the atmosphere near the surface of the second measuring inside pump electrode 44 covered with the third diffusion control part 45 and the reference gas of the reference gas introduction space 43. In this embodiment, the surface of the second measuring inside pump electrode 44 also includes wall portions of a number of minute holes located to be in communication with the outside in the porous cermet forming the second measuring inside pump electrode 44, not only the portion being in contact with the third diffusion control part 45.

The electromotive force V2 to be generated in the third oxygen-partial-pressure detection sensor cell 41 varies in accordance with an oxygen partial pressure of the atmosphere existing near the surface of the second measuring inside pump electrode 44. The sensor element 101 uses this electromotive force V2 to feedback-control a variable power source 46 for the second measuring pumping cell 47. This allows the pump voltage Vp2, which is applied to the second measuring pumping cell 47 by the variable power source 46, to be controlled in accordance with the oxygen partial pressure of the atmosphere near the surface of the second measuring inside pump electrode 44.

The sensor element 101 is also configured to measure an electromotive force V_{ref} generated between the outside pump electrode 23 and the reference electrode 42 to obtain the oxygen partial pressure outside the sensor element 101.

In the sensor element 101, further, a heater 70 is formed to be vertically sandwiched between the second substrate layer 2 and the third substrate layer 3. The heater 70 generates heat by power feeding from the outside through a heater electrode (not shown) provided on the lower surface of the first substrate layer 1. Heat generation by the heater 70 increases the oxygen-ion conductivity of the solid electrolyte forming the sensor element 101. The heater 70 is buried over the entire area extending from the first internal space 20 to the second internal space 40 to heat a predetermined portion of the sensor element 101 to a predetermined temperature or maintain the temperature of the predetermined portion at a predetermined temperature. Formed on the upper and lower surfaces of the heater 70 is a heater insulating layer 72 made of, for example, alumina to obtain electrical insulation between the second substrate layer 2 and the third substrate layer 3 (hereinafter, the heater 70, the heater electrode, and the heater insulating layer 72 are correctively referred to as a heater part as well).

Measurement of Concentrations of Water Vapor and Carbon Dioxide

The technique of identifying the concentrations of water vapor and carbon dioxide of a measurement gas with the gas sensor 100 having the above-mentioned configuration will be described next.

First, the sensor element 101 is placed in the atmosphere of the measurement gas containing oxygen, water vapor, carbon dioxide, nonflammable (inert) gases. So, the measurement gas is introduced into the sensor element 101 through the gas inlet 10. The measurement gas that has been introduced into the sensor element 101 reaches the first internal space 20, following the application of a predetermined diffusion resistance by the first diffusion control part 11 or further by the fourth diffusion control part 13.

In the first internal space 20, through the operation of the main pumping cell 21, oxygen is pumped out such that the oxygen partial pressure of the inside measurement gas has a sufficiently low predetermined value (for example, 10⁻¹¹ atm (1.01325 10⁻⁶ Pa) to 10⁻³⁰ atm (1.01325 10⁻²⁵ Pa)) to an extent that substantially all of the water vapor and carbon dioxide contained in the measurement gas are decomposed. Herein, "substantially all of the water vapor and carbon dioxide contained in the measurement gas are decomposed" means that the water vapor and carbon dioxide introduced into the first internal space 20 are not introduced into the second internal space 40.

When oxygen is pumped out of the first internal space 20 in this manner, the decomposition reaction of water vapor (2H₂O→2H₂+O₂) and the decomposition reaction of carbon dioxide (2CO₂→2CO+O₂) are promoted in the first internal space 20, so that hydrogen and oxygen are generated from the former reaction and carbon monoxide and oxygen are generated from the latter reaction. Of those, oxygen is pumped out by the main pumping cell 21, but hydrogen and carbon monoxide are introduced into the second internal space 40 together with the other gases.

Actual pumping-out of oxygen is implemented in a manner that a target value of the electromotive force V0, which is generated between the main inside pump electrode 22 and the reference electrode 42 in the first oxygen-partial-pressure detection sensor cell 60, is preliminarily determined to such a predetermined value as to obtain the above-mentioned oxygen partial pressure, and then the variable power source 24 controls the pump voltage Vp0 to be applied to the main pumping cell 21 in accordance with the difference between the actual value of the electromotive force V0 and the target value. For example, when the measurement gas containing a large amount of oxygen reaches the first internal space 20, the value of the electromotive force V0 varies considerably from the target value. Therefore, the variable power source 24 controls the pump voltage Vp0 to be applied to the main pumping cell 21 in order to reduce such variations.

The target value of the electromotive force V0 is preferably set such that a (target) oxygen partial pressure in the first internal space 20 becomes lower as the oxygen partial pressure of the measurement gas that has reached the first internal space 20 becomes higher (as the difference between the measured value of the electromotive force V0 and the latest determined target value becomes larger). This allows oxygen to be pumped out more reliably.

The measurement gas that has the oxygen partial pressure decreased as described above reaches the second internal space 40, following the application of a predetermined diffusion resistance by the second diffusion control part 30.

In the second internal space 40, pumping-in of oxygen is performed through the operation of the first measuring pumping cell 50. This pumping-in of oxygen is performed to cause, of the measurement gas that has reached a position near the surface of the first measuring pumping cell 50 in the second internal space 40 and contains hydrogen and carbon monoxide generated in the first internal space 20, only hydrogen to selectively react with the oxygen existing at the position. That is to say, oxygen is pumped in through the first measuring pumping cell 50 such that the reaction 2H₂+O₂→2H₂O is promoted to again generate an amount of water vapor correlated with the amount of water vapor introduced through the gas inlet 10. In this embodiment, being "correlated with the amount of water vapor or carbon dioxide" means that the amount of water vapor or carbon dioxide introduced through the gas inlet 10 and the amount of the water vapor or carbon dioxide generated again by burning of the hydrogen or carbon monoxide generated by the decomposition of water vapor or carbon dioxide are equal to each other or fall within a constant error range allowable from the perspective of measurement accuracy.

Actual pumping-in of oxygen is implemented in a manner that a target value of the electromotive force V1, which is generated between the first measuring inside pump electrode 51 and reference electrode 42 in the second oxygen-partial-pressure detection sensor cell 61, is preliminarily determined to such a predetermined value as to obtain an oxygen partial pressure high enough to burn all of the hydrogen contained in the measurement gas that has reached near the surface of the first measuring inside pump electrode 51 and to substantially cause no burning of carbon monoxide contained in the measurement gas, and then the variable power source 52 controls the pump voltage Vp1 to be applied to the first measuring pumping cell 50 in accordance with the difference between the actual value of the electromotive force V1 and the target value. For example, when the measurement gas containing a large amount of hydrogen reaches near the first measuring inside pump electrode 51 and reacts with oxygen, an oxygen partial pressure decreases, which causes the value of the electromotive force V1 to vary considerably from the target value. Therefore, the variable power source 52 controls the pump voltage Vp1 to be applied to the first measuring pumping cell 50 so as to reduce the above-mentioned variations.

In this case, the current (water vapor detection current) Ip1 flowing through the first measuring pumping cell 50 is approximately proportional to the concentration of the water vapor generated by burning of hydrogen near the surface of the first measuring inside pump electrode 51 (the water vapor detection current Ip1 and the water vapor concentration have a linear relationship). The amount of the water vapor generated through such burning has a correlation with the amount of water vapor of the measurement gas, which has been introduced through the gas inlet 10 and then decomposed once in the first internal space 20. Thus, detecting the water vapor detection current Ip1 allows the concentration of water vapor of the measurement gas to be obtained based on the value of the water vapor detection current Ip1. How to actually identify the concentration of water vapor will be described below.

If the measurement gas introduced through the gas inlet 10 contains no water vapor, needless to say, the decomposition of the water vapor in the first internal space 20 does not occur, and accordingly, hydrogen is not introduced into the second internal space 40. Thus, the electromotive force V1 keeps a target value with a slight amount of water vapor detection current Ip1 flowing, which corresponds to an offset current OFS2 described below.

The measurement gas in which hydrogen has been burned reaches the second measuring inside pump electrode 44, following the application of a predetermined diffusion resistance by the third diffusion control part 45.

On the surface of the second measuring inside pump electrode 44, pumping-in of oxygen is performed through the operation of the second measuring pumping cell 47. This pumping-in of oxygen is performed such that, of the measurement gas that has reached near the surface of the second measuring inside pump electrode 44 and contains the carbon monoxide generated in the first internal space 20, only carbon monoxide selectively burns. That is to say, oxygen is pumped in to the surface of the second measuring inside pump electrode 44 such that the reaction 2CO+O₂→2C₂O₂ is promoted to again generate an amount of carbon dioxide correlated with the amount of carbon dioxide introduced through the gas inlet 10.

Actual pumping-in of oxygen is implemented in a manner that a target value of the electromotive force V2, which is generated between the second measuring inside pump electrode 44 and reference electrode 42 in the third oxygen-partial-pressure detection sensor cell 41, is preliminarily determined to such a predetermined value as to obtain an oxygen partial pressure to cause burning of carbon monoxide and cause substantially no burning of hydrocarbon gas contained in the measurement gas, and then the variable power source 46 controls the pump voltage Vp2 to be applied to the second measuring pumping cell 47 in accordance with the difference between the actual value of the electromotive force V2 and the target value. For example, when the measurement gas containing a large amount of carbon monoxide reaches near the surface of the second measuring inside pump electrode 44 and reacts with oxygen, an oxygen partial pressure decreases, which causes the value of the electromotive force V2 to vary considerably from the target value. Therefore, the variable power source 46 controls the pump voltage Vp2 to be applied to the second measuring pumping cell 47 so as to reduce the above-mentioned variations.

In this case, the current (carbon dioxide detection current) Ip2 flowing through the second measuring pumping cell 47 is approximately proportional to the concentration of the carbon dioxide generated by burning of carbon monoxide on the surface of the second measuring inside pump electrode 44 (the carbon dioxide detection current Ip2 and the carbon dioxide concentration have a linear relationship). The amount of the carbon dioxide generated through such burning has a correlation with the amount of carbon dioxide of the measurement gas, which has been introduced through the gas inlet 10 and then decomposed once in the first internal space 20. Thus, detecting the carbon dioxide detection current Ip2 allows the concentration of carbon dioxide of the measurement gas to be obtained based on the value of the carbon dioxide detection current Ip2. How to actually identify the concentration of carbon dioxide will be described below.

If the measurement gas introduced through the gas inlet 10 contains no carbon dioxide, needless to say, the decomposition of carbon dioxide in the first internal space 20 does not occur, and accordingly, carbon monoxide is not introduced into the second internal space 40. Thus, the electromotive force V2 keeps a target value with a slight amount of water carbon dioxide detection current Ip2 flowing, which corresponds to an offset current OFS2 described below.

The above-mentioned manner of controlling an oxygen partial pressure facilitates selective burning of hydrogen near the surface of the first measuring inside pump electrode 51 and selective burning of carbon monoxide on the surface of the second measuring inside pump electrode 44. This is because, due to a difference in gas diffusion rate between hydrogen and carbon monoxide, hydrogen has a higher gas diffusion rate and is more likely to come into contact with oxygen for burning than carbon monoxide, and hydrogen is more likely to combine with oxygen, that is, is more likely to burn, than carbon monoxide.

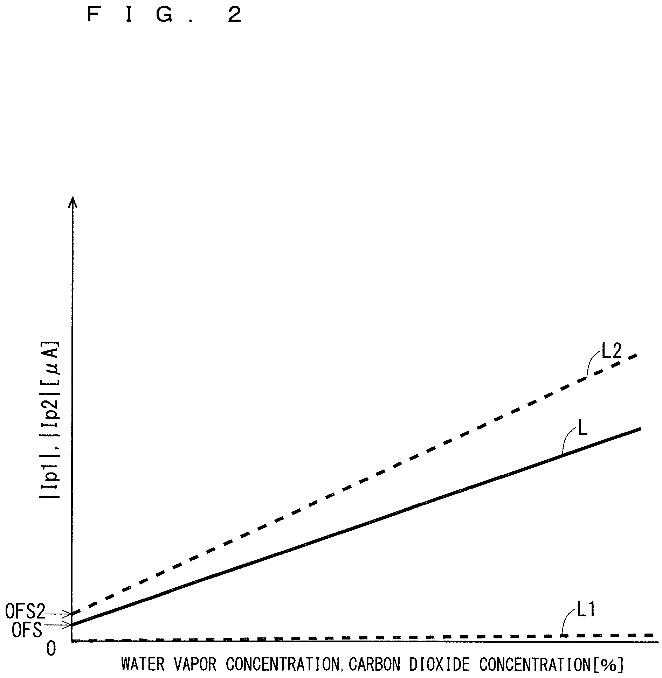

FIG. 2 shows a graph (sensitivity characteristics) schematically showing the functional relationship between absolute values of the water vapor detection current Ip1 and the carbon dioxide detection current Ip2 and actual concentrations of water vapor and carbon dioxide. FIG. 2 shows the values of the water vapor detection current Ip1 and the carbon dioxide detection current Ip2 by absolute values for brevity of description. More specifically, when oxygen is pumped in near the surface of the first measuring inside pump electrode 51 and to the surface of the second measuring inside pump electrode 44 in the gas sensor 100 of FIG. 1, the water vapor detection current Ip1 and the carbon dioxide detection current Ip2 have negative values.

FIG. 2 illustrates an ideal functional relationship between the water vapor detection current Ip1 and the water vapor concentration and an ideal functional relationship between the carbon dioxide detection current Ip2 and the carbon dioxide concentration by a solid line L. The solid line L is a straight line with a non-zero intercept on the vertical axis. Although FIG. 2 illustrates only one solid line L for the sake of convenience, in actuality, the water vapor sensitivity characteristics and the carbon dioxide sensitivity characteristics differ from each other, and accordingly, the functional relationships thereof (the inclination and a value of the intercept) generally do not coincide with each other. Although the values of the water vapor detection current Ip1 and the carbon dioxide detection current Ip2 with zero water vapor concentration and zero carbon dioxide concentration (where no water vapor and no carbon dioxide exist) should be originally zero, in actuality, a slight amount of the pump-in current for obtaining a target oxygen concentration, namely, the water vapor detection current Ip1 and the carbon dioxide detection current Ip2 flow, even when no water vapor and no carbon dioxide exist. This is because oxygen becomes scarce compared to a target oxygen concentration (oxygen partial pressure) near the surface of the first measuring inside pump electrode 51 and near the surface of the second measuring inside pump electrode 44, due to an influence of the main pumping cell 21 pumping out oxygen. In particular, the water vapor detection current Ip1 and the carbon dioxide detection current Ip2 at this time are referred to as an offset current OFS.

In the gas sensor 100 according to this embodiment, prior to its use, the sensitivity characteristics (specifically, the offset current OFS and the slope of the graph) as shown in FIG. 2 are preliminarily identified for each sensor element 101 based on the values of the water vapor detection current Ip1 and the carbon dioxide detection current Ip2 obtained when the gas having a known water vapor concentration and a known carbon dioxide concentration is supplied to the gas sensor 100. In actually detecting water vapor and carbon dioxide, the values of the water vapor detection current Ip1 and the carbon dioxide detection current Ip2 are constantly measured, to thereby obtain a water vapor concentration and a carbon dioxide concentration corresponding to each individual measured value based on the sensitivity characteristics preliminarily identified.

As is apparent from the above description, pumping-in of oxygen to near the surface of the first measuring inside pump electrode 51 by the first measuring pumping cell 50 and pumping-in of oxygen to near the surface of the second measuring inside pump electrode 44 by the second measuring pumping cell 47 are performed independently of each other, which allows the calculation of a water vapor concentration based on the water vapor detection current Ip1 and the calculation of a carbon dioxide concentration based on the carbon dioxide detection current Ip2 to be performed independently of each other. In other words, even when the measurement gas contains any one of water vapor and carbon dioxide, the gas sensor 100 can preferably obtain its concentration.

For accurate measurements of a water vapor concentration and a carbon dioxide concentration in this manner, it is necessary, in the determination of sensitivity characteristics as well as in actual use, that the water vapor and carbon dioxide of the measurement gas be decomposed reliably in the first internal space 20, that carbon monoxide should not be burned near the surface of the first measuring inside pump electrode 51 but only hydrogen be burned reliably, and that carbon monoxide be burned reliably on the surface of the second measuring inside pump electrode 44.

To satisfy those needs, the target values of the electromotive force V0 in the first oxygen-partial-pressure detection sensor cell 60, the electromotive force V1 in the second oxygen-partial-pressure detection sensor cell 61, and the electromotive force V2 in the third oxygen-partial-pressure detection sensor cell 41 are preferably determined so as to satisfy such relationships that the oxygen partial pressure of the second internal space 40, particularly near the surface of the first measuring inside pump electrode 51, is higher than the oxygen partial pressure of the first internal space 20 and that the oxygen partial pressure near the surface of the second measuring inside pump electrode 44 is equal to or higher than the oxygen partial pressure near the surface of the first measuring inside pump electrode 51.

If a little amount of oxygen is pumped out by the main pumping cell 21 due to an excessively high oxygen partial pressure in the first internal space 20, the generation of hydrogen and carbon monoxide by decomposition of water vapor and carbon dioxide is insufficient, and the measurement gas containing oxygen, and further, the remaining water vapor and carbon dioxide that have not been decomposed are introduced into near the surface of the first measuring inside pump electrode 51, and further, near the surface of the second measuring inside pump electrode 44. As a result, an amount of oxygen pumped in from near the surface of the first measuring inside pump electrode 51 and from near the surface of the second measuring inside pump electrode 44 is smaller than an original amount, and thus, in this case, the sensitivity characteristics indicated by a broken line L1 with a gentle slope, shown in FIG. 2, are obtained. When the gas sensor 100 is used in the partial pressure setting described above, the water vapor concentration and the carbon dioxide concentration are calculated to be excessively lower than the actual values, even if the sensitivity characteristics set in advance are correct.

If the oxygen partial pressure targeted is too low near the surface of the first measuring inside pump electrode 51 and near the surface of the second measuring inside pump electrode 44, oxygen is not pumped in sufficiently, and hydrogen and carbon monoxide remain. In this case, the sensitivity characteristics indicated by the broken line L1 with a gentle slope, shown in FIG. 2, are also obtained. Needless to say, also in this case, accurately calculating concentration is difficult.

Meanwhile, if the oxygen partial pressure at the position near the surface of the first measuring inside pump electrode 51 is excessively high, at this position, carbon monoxide is unintentionally oxidized, though only selective oxidation of hydrogen is intended. The sensitivity characteristics in this case have a larger intercept and a steeper slope, as indicated by a broken line L2 in FIG. 2, than those of the solid line L indicating the actual sensitivity characteristics (the value of the interception in this case is an offset current OFS2). When the gas sensor 100 is used in the above-mentioned partial-pressure setting, the water vapor concentration and the carbon dioxide concentration are calculated to be much higher than actual values even if the preset sensitivity characteristics are correct. Also for an excessively high oxygen partial pressure near the surface of the second measuring inside pump electrode 44, the offset current becomes larger than the original sensitivity characteristics, similarly to, for example, the offset current OFS2 in the sensitivity characteristics indicated by the broken line L2.

More specifically, to obtain the sensitivity characteristics indicated by the solid line L of FIG. 2, at least, the oxygen partial pressure of the first internal space 20 needs to be set to 10⁻¹² atm (1.01325 10⁻⁷ Pa) to 10⁻³⁰ atm (1.01325 10⁻²⁵ Pa). It is further preferable that the oxygen partial pressure of the second internal space 40, particularly near the surface of the first measuring inside pump electrode 51, be set to 10⁻⁵ atm (1.01325 Pa) to 10⁻¹⁵ atm (1.01325 10⁻¹⁰ Pa) and that the oxygen partial pressure on the surface of the second measuring inside pump electrode 44 be set to 10⁰ atm (1.01325 10⁵ Pa) to 10⁻¹⁵ atm (1.01325 10⁻¹⁰ Pa).

Additionally, to accurately obtain concentrations of water vapor and carbon dioxide up to the highest possible concentration values using the gas sensor 100, in other words, to cause the sensitivity characteristics as indicated by the solid line L of FIG. 2 to be exhibited up to the highest possible concentration, the flow rate of the measurement gas flowing into the first internal space 20 through the gas inlet 10 needs to be controlled appropriately in the gas sensor 100, in addition to adjusting the oxygen partial pressure of the first internal space 20 so as to satisfy the above-mentioned range.

The reason is following. As the concentrations of the water vapor and carbon dioxide of a measurement gas flowing into the first internal space 20 become higher, an amount of oxygen generated by the decomposition reactions of them, that is, an amount of oxygen to be pumped out by the main pumping cell 21 increases. Inherently, based on the theory of chemical equilibrium, the decomposition reactions of water vapor and carbon dioxide described above are more promoted as oxygen concentration becomes lower. Therefore, if the flow rate of the measurement gas flowing into the first internal space 20 is too high, the absolute amount of flowing oxygen becomes higher. This results in insufficient pumping-out of oxygen by the main pumping cell 21. In such a case, consequently, water vapor and carbon dioxide are more difficult to be decomposed completely in the first internal space 20 as the concentrations of water vapor and carbon dioxide of a measurement gas become higher. To prevent an occurrence of such a situation, thus, the flow rate of a measurement gas flowing into the first internal space 20 needs to be limited in such a range that sensitivity characteristics are preferably achieved to allow the measurement in up to a high concentration range.

When, for example, the exhaust gas from an internal engine such as a vehicle engine is a measurement gas, for the concentrations of water vapor and carbon dioxide, at least approximately 20 vol% is desired to be set as an upper limit of the value enabling measurement, and further, measurement is more preferably performed accurately up to approximately 30 vol%.

In the gas sensor 100 according to this embodiment, the flow rate of the measurement gas flowing into the first internal space 20 through the gas inlet 10 in the sensor element 101 depends on the diffusion resistance applied to a measurement gas between the gas inlet 10 and the first internal space 20. More specifically, it is the first diffusion control part 11 and the fourth diffusion control part 13 that substantially control the inflow (diffusion) of the measurement gas between the gas inlet 10 and the first internal space 20, and accordingly, the flow rate depends on the diffusion resistances applied by the first diffusion control part 11 and the fourth diffusion control part 13.

For example, if the value of a larger one of the diffusion resistances of the first diffusion control part 11 and the fourth diffusion control part 13 is 370/cm or more, the linearity of sensitivity characteristics is achieved in the range of up to at least approximately 20 vol% for concentrations of water vapor and carbon dioxide, and accurate measurements are enabled for both of the concentrations. If the value of the diffusion resistance is 680 /cm or more, the linearity of sensitivity characteristics can be achieved in up to the range of at least approximately 30 vol% for the concentrations of water vapor and carbon dioxide.

An excessively high diffusion resistance results in an excessively gentle slope of sensitivity characteristics (as indicated by the broken line L1 of FIG. 2), undesirably resulting in poor measurement accuracy. In view of the above, the diffusion resistances of the first diffusion control part 11 and the fourth diffusion control part 13 are preferably 1000 /cm or less.

In this embodiment, the diffusion resistances of the first diffusion control part 11 and the fourth diffusion control part 13 are each defined as a value L/S where L represents the length in the element longitudinal direction of the diffusion control part and S represents a total area (a total of cross-sectional areas of two slits) perpendicular to the element longitudinal direction.

For example, it is preferable to set, for the slit portions of the first diffusion control part 11 and the fourth diffusion control part 13, a length L to 0.03 cm to 0.07 cm, the thickness (the size in the lamination direction of each solid electrolyte layer) to 0.001 cm to 0.010 cm, and the width (the size in the direction perpendicular to the element longitudinal direction in the plane of the spacer layer 5) to 0.01 cm to 0.05 cm. Needless to say, the value of the cross-sectional area S is to be sufficiently smaller than the area of the cross section perpendicular to the element longitudinal direction of the first internal space 20.

As described above, in the gas sensor according to this embodiment, the main pumping cell is operated in the first internal space, so that the measurement gas whose oxygen partial pressure is always set to a constant low value (a value that decomposes all of the water vapor and carbon dioxide contained) is supplied to the second internal space. Then, in the second internal space, particularly near the surface of the first measuring inside pump electrode, only hydrogen generated by the decomposition of water vapor in the first internal space is selectively burned. The pump current, which flows through the first measuring pumping cell for supplying oxygen in the above-mentioned burning, has a linear relationship with the concentration of the water vapor generated by burning of hydrogen, that is, the concentration of the water vapor of the measurement gas introduced through the gas inlet. Based on the linear relationship, the water vapor concentration of the measurement gas can be obtained.

The measurement gas after hydrogen is burned passes through the third diffusion control part to reach near the surface of the second measuring inside pump electrode. On the surface of the second measuring inside pump electrode, only carbon monoxide is selectively burned. The pump current flowing through the second measuring pumping cell for supplying oxygen in the burning has a linear relationship with the concentration of carbon dioxide generated through burning of carbon monoxide, that is, the concentration of carbon dioxide of a measurement gas introduced through the gas inlet. Based on the linear relationship, the carbon dioxide concentration of a measurement gas can be obtained.

The gas sensor according to this embodiment can therefore accurately obtain the concentrations of water vapor and carbon dioxide irrespective of whether a measurement gas contains any one of or both of water vapor and carbon dioxide.

Besides, in the gas sensor according to this embodiment, a diffusion resistance applied to the measurement gas between the gas inlet and the first internal space is appropriately determined, so that the upper limits for measuring the concentrations of water vapor and carbon dioxide are approximately 20 vol% or more.

Therefore, the gas sensor according to this embodiment can accurately obtain the concentration of water vapor and the concentration of carbon dioxide of a measurement gas containing various gases including oxygen, water vapor, carbon dioxide, and nonflammable (inert) gases, such as an exhaust gas from an internal combustion engine, for example, a vehicle engine. In other words, the gas sensor according to this embodiment can be preferably put into practical use as a sensor for exhaust gas in an internal combustion engine.

### [Examples]

### Example 1

In this example, three types of gas sensors 100, each having a different diffusion resistance from the gas inlet 10 to the first internal space 20, were prepared, and the sensitivity characteristics thereof were evaluated using various model gases having a known water vapor concentration and a known carbon dioxide concentration. The sensitivity characteristics were evaluated in three ways each having a different oxygen partial pressure of the first internal space 20. Employed as the values of the diffusion resistance from the gas inlet 10 to the first internal space 20 of three types of gas sensors 100 were values of the diffusion resistance calculated from the length L in the element longitudinal direction and an area S of a cross section perpendicular to the element longitudinal direction for the first diffusion control part 11 and the fourth diffusion control part 13. The length L in the element longitudinal direction used in calculation was common to the three types, 0.05 cm, and the area S of the cross section perpendicular to the element longitudinal direction was 0.000179 cm², 0.000106 cm², and 0.0000556 cm² for the respective types. For all the types, the area of the main inside pump electrode 22 was 16 mm².

Table 1 shows the combinations (which are referred to as sensor conditions 1 to 12) of the oxygen partial pressure of the first internal space 20 and the diffusion resistance from the gas inlet 10 to the first internal space 20 of the gas sensor 100.

**[Table 1]**

| Sensor condition | Oxygen partial pressure of first internal space | Diffusion resistance up to first internal space |
|---|---|---|
| | atm | /cm |
| 1 | 2.1 × 10⁻¹⁰ | 280 |
| 2 | 2.1 × 10⁻¹⁰ | 470 |
| 3 | 2.1 × 10⁻¹⁰ | 900 |
| 4 | 5.7 × 10⁻¹² | 280 |
| 5 | 5.7 × 10⁻¹² | 470 |
| 6 | 5.7 × 10⁻¹² | 900 |
| 7 | 1.0× 10⁻²⁵ | 280 |
| 8 | 1.0× 10⁻²⁵ | 470 |
| 9 | 1.0× 10⁻²⁵ | 900 |
| 10 | 2.5 × 10⁻²⁸ | 280 |
| 11 | 2.5 × 10⁻²⁸ | 470 |
| 12 | 2.5 × 10⁻²⁸ | 900 |

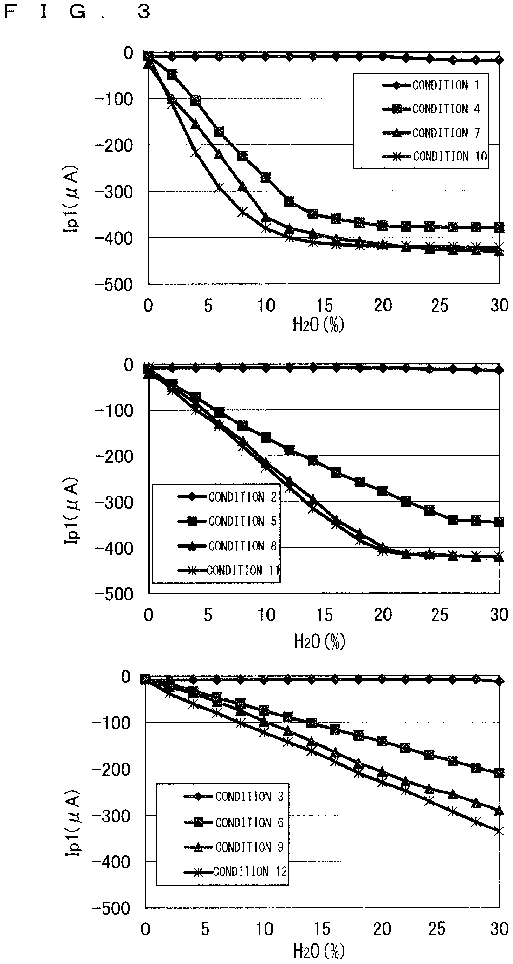

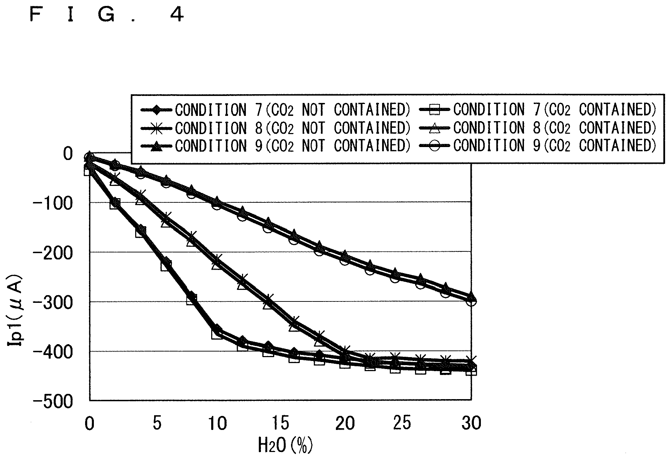

FIGS. 3 and 4 show the evaluation results of water vapor sensitivity characteristics. Specifically, FIG. 3 shows a graph showing, on one coordinate plane, the relationship between the water vapor concentration of a model gas and the water vapor detection current Ip1 per sensor condition having the same value of the diffusion resistance from the gas inlet 10 to the first internal space 20. The gases prepared as the model gases were as follows: the oxygen concentration was fixed at 10%, the water vapor concentration was varied in the range of 0 vol% to 30 vol%, and the remaining gas was nitrogen.

As shown in FIG. 3, in all of the conditions 1 to 3 where the oxygen partial pressure of the first internal space 20 is 2.1× 10⁻¹⁰ atm (2.127825 10⁻⁵ Pa), the water vapor detection current Ip1 was almost the same irrespective of water vapor concentration. In other words, no sensitivity characteristics were obtained. This means that the water vapor contained in the measurement gas was not decomposed due to an excessively high oxygen partial pressure.

In contrast, in the sensor conditions 4 to 12 where the oxygen partial pressure of the first internal space 20 was set to be lower than those of the sensor conditions 1 to 3, the relationship between the water vapor concentration and water vapor detection current Ip1 had linearity in at least part of the range. Specifically, in the sensor conditions 4, 7, and 10 where the value of the diffusion resistance from the gas inlet 10 to the first internal space 20 was 280 /cm, linearity was obtained in the range in which the water vapor concentration was up to approximately 10 vol%. In the sensor conditions 5, 8, and 11 where the value of the diffusion resistance was 470 /cm, linearity was obtained in the range in which the water vapor concentration was up to approximately 20 to 25 vol%. In the sensor conditions 6, 9, and 12 where the value of the diffusion resistance was 900 /cm, linearity was obtained in the range in which the water vapor concentration was up to approximately 30 vol% that is the highest water vapor concentration of the prepared model gases.

FIG. 4 shows the results of examining the influence of the presence or absence of carbon dioxide on the water vapor sensitivity characteristics. Specifically, FIG. 4 shows the results of evaluating the sensitivity characteristics of model gases in the sensor conditions 7 to 9 shown in Table 1. The gases prepared as the model gases were set as follows: the oxygen concentration and carbon dioxide concentration were each fixed at 10 vol%, the water vapor concentration was varied in the range of 0 vol% to 30 vol%, and the remaining gas was nitrogen. For easy comparison, FIG. 4 also shows the results obtained in the sensor conditions 7 to 9 shown in FIG. 3, in which the model gas contains no carbon dioxide.

In each of the sensor conditions, as shown in FIG. 4, the water vapor sensitivity characteristics when water vapor and carbon dioxide coexist were almost the same as those when no carbon dioxide exists.

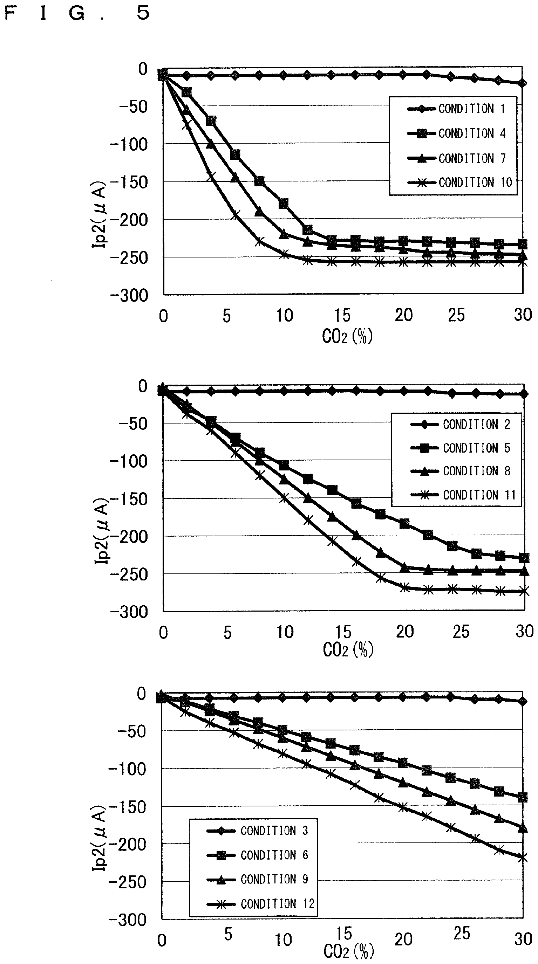

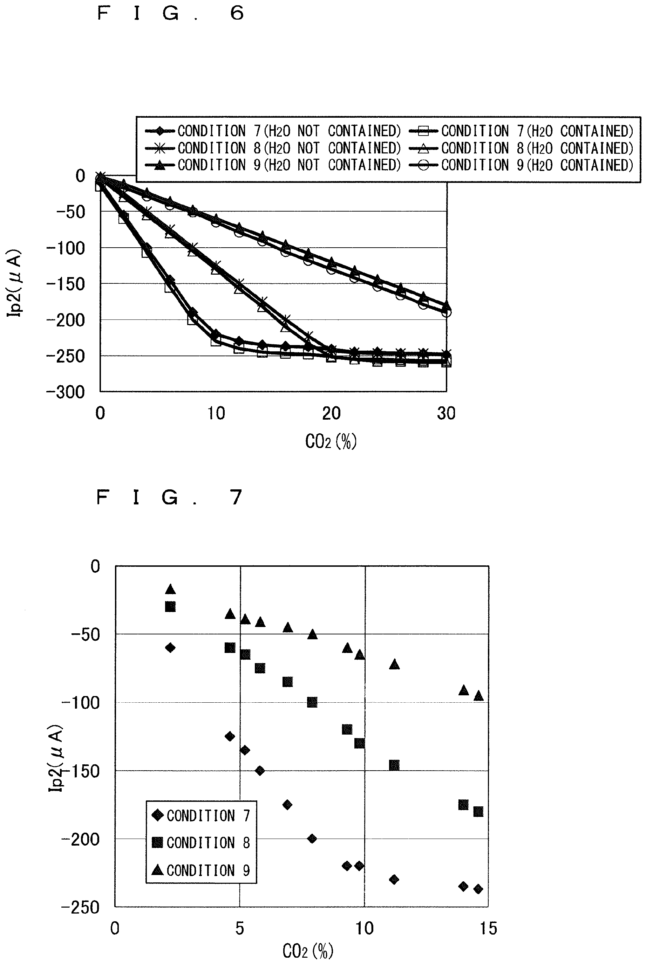

FIGS. 5 and 6 show the evaluation results of carbon dioxide sensitivity characteristics. Specifically, FIG. 5 shows, on one coordinate plane, a graph showing the relationship between the carbon dioxide concentration of a model gas and the carbon dioxide detection current Ip2 per sensor condition having the same value of the diffusion resistance from the gas inlet 10 to the first internal space 20. The gases prepared as the model gases were as follows: the oxygen concentration was fixed at 10%, the carbon dioxide concentration was varied in the range of 0 vol% to 30 vol%, and the remaining gas was nitrogen.

As shown in FIG. 5, in all of the conditions 1 to 3 where the oxygen partial pressure of the first internal space 20 is 2.1 × 10⁻¹⁰ atm (2.127825 10⁻⁵ Pa), the carbon dioxide detection current Ip2 was almost the same irrespective of carbon dioxide concentration. In other words, no sensitivity characteristics were obtained. This means that the carbon dioxide contained in the measurement gas was not decomposed due to an excessively high oxygen partial pressure.

In contrast, in the sensor conditions 4 to 12 where the oxygen partial pressure of the first internal space 20 was set to be lower than those of the sensor conditions 1 to 3, the relationship between the carbon dioxide concentration and carbon dioxide detection current Ip2 had linearity in at least part of the range. Specifically, in the sensor conditions 4, 7, and 10 where the value of the diffusion resistance from the gas inlet 10 to the first internal space 20 was 280 /cm, linearity was obtained in the range in which the carbon dioxide concentration was up to approximately 10 vol%. In the sensor conditions 5, 8, and 11 where the value of the diffusion resistance was 470 /cm, linearity was obtained in the range in which the carbon dioxide concentration was up to approximately 20 to 25 vol%. In the sensor conditions 6, 9, and 12 where the value of the diffusion resistance was 900 /cm, linearity was obtained in the range in which the carbon dioxide concentration was up to approximately 30 vol% that is the highest water vapor concentration of the prepared model gases.

FIG. 6 shows the results of examining the influence of the presence or absence of water vapor on the carbon dioxide sensitivity characteristics. Specifically, FIG. 6 shows the results of evaluating the sensitivity characteristics of model gases in the sensor conditions 7 to 9 shown in Table 1. The gases prepared as model gases were set as follows: the oxygen concentration and water vapor concentration were each fixed at 10 vol%, the carbon dioxide concentration was varied in the range of 0 vol% to 30 vol%, and the remaining gas was nitrogen. For easy comparison, FIG. 6 also shows the results in the sensor conditions 7 to 9 shown in FIG. 5, in which the model gas contains no water vapor.

In each of the sensor conditions, as shown in FIG. 6, the carbon dioxide sensitivity characteristics when water vapor and carbon dioxide coexist were almost the same as those when no carbon dioxide exists.

The results above indicate that by setting the oxygen partial pressure of the first internal space 20 to 10⁻¹² atm (1.01325 10⁻⁷ Pa) or lower, irrespective of whether water vapor and carbon dioxide coexist in a measurement gas that may contain at least one of water vapor and carbon dioxide, the concentration of water vapor and the concentration of carbon dioxide of the measurement gas can be preferably measured.

Further, the results above indicate that by setting the value of the diffusion resistance from the gas inlet 10 to the first internal space 20 to 370 /cm or higher, the water vapor concentration and carbon dioxide concentration can be measured in the range of up to approximately 20 to 25 vol% or higher.

### Example 2

In this example, the carbon dioxide detection current Ip2 was obtained in the sensor conditions 7 to 9 of Table 1, where the exhaust gases actually emitted from various vehicle engines were measurement gases. Table 2 lists the types of engines used and the results of obtaining the carbon dioxide concentrations of the exhaust gases emitted from the engines with an engine exhaust gas analyzer.

**[Table 2]**

| Type of engine | Co₂ concentration (%) |
|---|---|
| Diesel | 2.2 |
| Diesel | 4.6 |
| Diesel | 5.2 |
| Diesel | 5.8 |
| Diesel | 6.9 |
| Diesel | 7.9 |
| Diesel | 9.3 |
| Natural gas | 9.8 |
| Diesel | 11.2 |
| Gasoline | 14.0 |
| Gasoline | 14.6 |

FIG. 7 shows the results of plotting the values of the carbon dioxide detection current Ip2 in the sensor conditions 7 to 9 against the carbon dioxide concentrations shown in Table 2.

FIG. 7 confirms that in the sensor condition 7, linearity is found between the carbon dioxide detection current Ip2 and the carbon dioxide concentration in the range where the carbon dioxide concentration is up to approximately 10 vol% and that in the sensor conditions 8 and 9, linearity is found between the carbon dioxide detection current Ip2 and the carbon dioxide concentration in the rage where the carbon dioxide concentration is at least up to approximately 15 vol%. Moreover, these results including the absolute value of the carbon dioxide detection current Ip2 almost match the results on the model gases shown in FIGS. 5 and 6. This means that the evaluations using the model gases in Example 1 are appropriate, and further, that the measurements using the gas sensor 100 in the embodiment above can be actually enabled.

## Claims

1. A gas sensor that has a sensor element (101) formed of an oxygen-ion conductive solid electrolyte (1-6) and identifies concentrations of a water vapor component and a carbon dioxide component of a measurement gas based on a current flowing through said solid electrolyte, said gas sensor comprising:
a gas inlet (10) through which said measurement gas is introduced from the outside;
a first diffusion control part (11, 13) that is in communication with said gas inlet and applies a first diffusion resistance to said measurement gas;
a first internal space (20) that is in communication with said first diffusion control part, into which the measurement gas is introduced with said first diffusion resistance from said outside;
a second diffusion control part (30) that is in communication with said first internal space and applies a second diffusion resistance to said measurement gas;
a second internal space (40) that is in communication with said second diffusion control part, into which the measurement gas is introduced with said second diffusion resistance from said first internal space;
a main electrochemical pumping cell (21) formed of a main internal electrode (22) formed to face said first internal space, a first external electrode (23) formed on an outer surface of said sensor element, and said solid electrolyte (4, 5, 6)located between said main internal electrode and said first external electrode;
a first measuring electrochemical pumping cell (50) formed of a first measuring internal electrode (51) formed to face said second internal space (40), a second external electrode (23) formed on the outer surface of said sensor element, and said solid electrolyte (4, 5, 6) located between said first measuring internal electrode and said second external electrode;
a second measuring electrochemical pumping cell (47) formed of a second measuring internal electrode (44) formed at a position in said second internal space which is farther from said second diffusion control part (30) than the position of said first measuring internal electrode (51), a third external electrode (23) formed on the outer surface of said sensor element, and said solid electrolyte (4, 5, 6) located between said second measuring internal electrode and said third external electrode;
a reference gas space (43, 48) into which a reference gas is introduced; and
a reference electrode (42) formed to face said reference gas space, wherein
the diffusion resistance from said gas inlet (10) to said first internal space (20) is 370 /cm or more and 1000 /cm or less, the diffusion resistance being defined as a value L/S where L represents the length of the diffusion control part in the longitudinal direction of the sensor element from the inlet (10) to the first internal space and S represents the total cross-sectional area of the diffusion control part perpendicular to the element direction,
the gas sensor has means configured and arranged to control said main electrochemical pumping cell (21) so as to adjust the oxygen partial pressure of said first internal space (20) to 10⁻¹² atm (1.01325 10⁻⁷ Pa) to 10⁻³⁰ atm (1.01325 10⁻²⁵ Pa) such that substantially all of said water vapor component and said carbon dioxide component are decomposed in said first internal space,
the gas sensor has means configured and arranged to control said first measuring electrochemical pumping cell (50) so as to adjust the oxygen partial pressure of said second internal space (40) such that hydrogen generated by the decomposition of said water vapor component selectively burns in said second internal space and that said oxygen partial pressure of said second internal space is higher than the oxygen partial pressure of said first internal space,
the gas sensor has means configured and arranged to control said second measuring electrochemical pumping cell (47) so as to adjust the oxygen partial pressure near a surface of said second measuring internal electrode (44) such that carbon monoxide generated by the decomposition of said carbon dioxide component selectively burns near the surface of said second measuring internal electrode and that said oxygen partial pressure near the surface of said second measuring internal electrode is higher than the oxygen partial pressure of said second internal space, and
said gas sensor is configured and disposed to
identify the concentration of said water vapor component contained in said measurement gas based on the magnitude of a current flowing between said first measuring internal electrode (51) and said second external electrode (23) when said first measuring electrochemical pumping cell (50) supplies oxygen to said second internal space, and
identify the concentration of said carbon dioxide component contained in said measurement gas based on the magnitude of a current flowing between said second measuring internal electrode (44) and said third external electrode (23) when said second measuring electrochemical pumping cell (47) supplies oxygen to the surface of said second measuring internal electrode.

2. The gas sensor according to claim 1, wherein the diffusion resistance from said gas inlet (10) to said first internal space (20) is 680 /cm or more and 1000 /cm or less.

3. The gas sensor according to claim 1 or 2, wherein said gas sensor is configured and disposed to
adjust a first voltage applied between said main internal electrode (22) and said first external electrode (23) to adjust the oxygen partial pressure of said first internal space (20) such that substantially all of said water vapor component and said carbon dioxide component are decomposed,
adjust a second voltage applied between said first measuring internal electrode (51) and said second external electrode (23) to adjust the oxygen partial pressure of said second internal space (40) such that all of the hydrogen generated by the decomposition of said water vapor component burns, and
adjust a third voltage applied between said second measuring internal electrode (44) and said third external electrode (23) to adjust the oxygen partial pressure on the surface of said second measuring internal electrode such that all of the carbon monoxide generated by the decomposition of said carbon dioxide component burns.

4. The gas sensor according to claim 3, further comprising:
a first oxygen-partial-pressure detection sensor cell (60) formed of said main internal electrode (22), said reference electrode (42), and said solid electrolyte (3-6) located between said main internal electrode and said reference electrode, said first oxygen-partial-pressure detection sensor cell detecting the magnitude of said first voltage;
a second oxygen-partial-pressure detection sensor cell (61) formed of said first measuring internal electrode (51), said reference electrode (42), and said solid electrolyte (3-6) located between said first measuring internal electrode and said reference electrode, said second oxygen-partial-pressure detection sensor cell detecting the magnitude of said second voltage; and
a third oxygen-partial-pressure detection sensor cell (41) formed of said second measuring internal electrode (44), said reference electrode (42), and said solid electrolyte (3, 4) located between said second measuring internal electrode and said reference electrode, said third oxygen-partial-pressure detection sensor cell detecting the magnitude of said third voltage,
wherein said gas sensor is configured and disposed to
adjust the oxygen partial pressure of said first internal space (20) based on a detection value of said first voltage in said first oxygen-partial-pressure detection sensor cell (60),
adjust the oxygen partial pressure of said second internal space (40) based on a detection value of said second voltage in said second oxygen-partial-pressure detection sensor cell (61), and
adjust the oxygen partial pressure of said second internal space (40) based on a detection value of said third voltage in said third oxygen-partial-pressure detection sensor cell (41).

5. The gas sensor according to any one of claims 1 to 4, wherein said gas sensor is configured and disposed to identify the concentrations of said water vapor component and said carbon dioxide component with
the oxygen partial pressure of said second internal space set to 10⁻⁵ atm (1.01325 Pa) to 10⁻¹⁵ atm (1.01325 10⁻¹⁰ Pa), and
the oxygen partial pressure on the surface of said second measuring internal electrode set to 10⁰ atm (1.01325 10⁵ Pa) to 10⁻¹⁵ atm (1.01325 10⁻¹⁰ Pa).

6. The gas sensor according to any one of claims 1 to 5, wherein said gas sensor is configured and disposed to set a target oxygen partial pressure in said first internal space (20) to become lower as the oxygen partial pressure in said measurement gas becomes higher.

7. The gas sensor according to any one of claims 1 to 6, wherein said second measuring internal electrode (44) is formed on the surface of said second internal space (40).

8. A method of measuring concentrations of a water vapor component and a carbon dioxide component of a measurement gas, by means of a gas sensor that has a sensor element (101) formed of an oxygen-ion conductive solid electrolyte (1-6) and identifies the concentrations of the water vapor component and the carbon dioxide component of the measurement gas based on a current flowing through said solid electrolyte, said gas sensor comprising:
a gas inlet (10) through which said measurement gas is introduced from the outside;
a first diffusion control part (11, 13) that is in communication with said gas inlet and applies a first diffusion resistance to said measurement gas;
a first internal space (20) that is in communication with said first diffusion control part, into which the measurement gas is introduced with said first diffusion resistance from said outside;
a second diffusion control part (30) that is in communication with said first internal space and applies a second diffusion resistance to said measurement gas;
a second internal space (40) that is in communication with said second diffusion control part, into which the measurement gas is introduced with said second diffusion resistance from said first internal space;
a main electrochemical pumping cell (21) formed of a main internal electrode (22) formed to face said first internal space, a first external electrode (23) formed on an outer surface of said sensor element, and said solid electrolyte (4, 5, 6)located between said main internal electrode and said first external electrode;
a first measuring electrochemical pumping cell (50) formed of a first measuring internal electrode (51) formed to face said second internal space (40), a second external electrode (23) formed on the outer surface of said sensor element, and said solid electrolyte (4, 5, 6) located between said first measuring internal electrode and said second external electrode;
a second measuring electrochemical pumping cell (47) formed of a second measuring internal electrode (44) formed at a position in said second internal space which is farther from said second diffusion control part (30) than the position of said first measuring internal electrode (51), a third external electrode (23) formed on the outer surface of said sensor element, and said solid electrolyte (4, 5, 6) located between said second measuring internal electrode and said third external electrode;
a reference gas space (43, 48) into which a reference gas is introduced; and
a reference electrode (42) formed to face said reference gas space, wherein
the diffusion resistance from said gas inlet (10) to said first internal space (20) is 370 /cm or more and 1000 /cm or less, the diffusion resistance being defined as a value L/S where L represents the length of the diffusion control part in the longitudinal direction of the sensor element from the inlet (10) to the first internal space and S represents the total cross-sectional area of the diffusion control part perpendicular to the element direction,
the method comprising the steps of:
controlling said main electrochemical pumping cell (21) so as to adjust the oxygen partial pressure of said first internal space (20) to 10⁻¹² (1.01325 10⁻⁷ Pa) atm to 10⁻³⁰ atm (1.01325 10⁻²⁵ Pa) such that substantially all of said water vapor component and said carbon dioxide component are decomposed in said first internal space,
controlling said first measuring electrochemical pumping cell (50) so as to adjust the oxygen partial pressure of said second internal space (40) such that hydrogen generated by the decomposition of said water vapor component selectively burns in said second internal space and that said oxygen partial pressure of said second internal space is higher than the oxygen partial pressure of said first internal space,
controlling said second measuring electrochemical pumping cell (47) so as to adjust the oxygen partial pressure near a surface of said second measuring internal electrode (44) such that carbon monoxide generated by the decomposition of said carbon dioxide component selectively burns near the surface of said second measuring internal electrode and that said oxygen partial pressure near the surface of said second measuring internal electrode is higher than the oxygen partial pressure of said second internal space, and
identifying the concentration of said water vapor component contained in said measurement gas based on the magnitude of a current flowing between said first measuring internal electrode (51) and said second external electrode (23) when said first measuring electrochemical pumping cell (50) supplies oxygen to said second internal space, and
identifying the concentration of said carbon dioxide component contained in said measurement gas based on the magnitude of a current flowing between said second measuring internal electrode (44) and said third external electrode (23) when said second measuring electrochemical pumping cell (47) supplies oxygen to the surface of said second measuring internal electrode.

9. The method according to claim 8, wherein the diffusion resistance from said gas inlet (10) to said first internal space (20) is 680 /cm or more and 1000 /cm or less.

10. The method according to claim 8 or 9, including:
adjusting a first voltage applied between said main internal electrode (22) and said first external electrode (23) to adjust the oxygen partial pressure of said first internal space (20) such that substantially all of said water vapor component and said carbon dioxide component are decomposed,
adjusting a second voltage applied between said first measuring internal electrode (51) and said second external electrode (23) to adjust the oxygen partial pressure of said second internal space (40) such that all of the hydrogen generated by the decomposition of said water vapor component burns, and
adjusting a third voltage applied between said second measuring internal electrode (44) and said third external electrode (23) to adjust the oxygen partial pressure on the surface of said second measuring internal electrode such that all of the carbon monoxide generated by the decomposition of said carbon dioxide component burns.

11. The method according to claim 10, wherein the gas sensor further comprises:
a first oxygen-partial-pressure detection sensor cell (60) formed of said main internal electrode (22), said reference electrode (42), and said solid electrolyte (3-6) located between said main internal electrode and said reference electrode, said first oxygen-partial-pressure detection sensor cell detecting the magnitude of said first voltage;
a second oxygen-partial-pressure detection sensor cell (61) formed of said first measuring internal electrode (51), said reference electrode (42), and said solid electrolyte (3-6) located between said first measuring internal electrode and said reference electrode, said second oxygen-partial-pressure detection sensor cell detecting the magnitude of said second voltage; and
a third oxygen-partial-pressure detection sensor cell (41) formed of said second measuring internal electrode (44), said reference electrode (42), and said solid electrolyte (3, 4) located between said second measuring internal electrode and said reference electrode, said third oxygen-partial-pressure detection sensor cell detecting the magnitude of said third voltage,
the method including the steps of
adjusting the oxygen partial pressure of said first internal space (20) based on a detection value of said first voltage in said first oxygen-partial-pressure detection sensor cell (60),
adjusting the oxygen partial pressure of said second internal space (40) based on a detection value of said second voltage in said second oxygen-partial-pressure detection sensor cell (61), and
adjusting the oxygen partial pressure of said second internal space (40) based on a detection value of said third voltage in said third oxygen-partial-pressure detection sensor cell (41).

12. The method according to any one of claims 8 to 11, wherein the concentrations of said water vapor component and said carbon dioxide component are identified with
the oxygen partial pressure of said second internal space set to 10⁻⁵ atm (1.01325 Pa) to 10⁻¹⁵ atm (1.01325 10⁻¹⁰ Pa), and
the oxygen partial pressure on the surface of said second measuring internal electrode set to 10⁰ atm (1.01325 10⁵ Pa) to 10⁻¹⁵ atm (1.01325 10⁻¹⁰ Pa).

13. The method according to any one of claims 8 to 12, wherein a target oxygen partial pressure in said first internal space (20) is set to become lower as the oxygen partial pressure in said measurement gas becomes higher.

14. The method according to any one of claims 8 to 13, wherein said second measuring internal electrode (44) is formed on the surface of said second internal space (40).

## Patentansprüche

1. Gassensor, der ein Sensorelement (101) aufweist, das aus einem Sauerstoffionen-leitenden Festelektrolyten (1-6) ausgebildet ist und eine Konzentration einer Wasserdampfkomponente und einer Kohlendioxidkomponente eines Messgases basierend auf einem durch den Festelektrolyten fließenden Strom identifiziert, wobei der Gassensor Folgendes umfasst:
einen Gaseinlass (10), durch den das Messgas aus der Außenumgebung eingeleitet wird;
ein erstes Diffusionssteuerteil (11, 13), das in Kommunikation mit dem Gaseinlass steht und einen ersten Diffusionswiderstand auf das Messgas aufbringt;
einen ersten Innenraum (20), der mit dem ersten Diffusionssteuerteil in Kommunikation steht, in das Messgas mit dem ersten Diffusionswiderstand aus der Außenumgebung eingeleitet wird;
ein zweites Diffusionssteuerteil (30), das in Kommunikation mit dem ersten Innenraum steht und einen zweiten Diffusionswiderstand auf das Messgas aufbringt;
einen zweiten Innenraum (40), der mit dem zweiten Diffusionssteuerteil in Kommunikation steht, in den das Messgas mit dem zweiten Diffusionswiderstand aus dem ersten Innenraum eingeleitet wird;
eine elektrochemische Hauptpumpzelle (21), die aus einer Hauptinnenelektrode (22), die dem ersten Innenraum zugewandt ausgebildet ist, einer ersten Außenelektrode (23), die auf einer Außenfläche des Sensorelements ausgebildet ist, und dem Festelektrolyten (4, 5, 6), der zwischen der Hauptinnenelektrode und der ersten Außenelektrode angeordnet ist, ausgebildet ist;
eine erste elektrochemische Messpumpzelle (50), die aus einer ersten Messinnenelektrode (51), die dem zweiten Innenraum (40) zugewandt ausgebildet ist, einer zweiten Außenelektrode (23), die auf der Außenfläche des Sensorelements ausgebildet ist, und dem Festelektrolyten (4, 5, 6), der zwischen der ersten Messinnenelektrode und der zweiten Außenelektrode angeordnet ist, ausgebildet ist;
eine zweite elektrochemische Messpumpzelle (47), die aus einer zweiten Messinnenelektrode (44), die an einer Position in dem zweiten Innenraum ausgebildet ist, die sich weiter von dem zweiten Diffusionssteuerteil (30) entfernt befindet als die Position der ersten Messinnenelektrode (51), einer dritten Außenelektrode (23), die auf der Außenfläche des Sensorelements ausgebildet ist, und dem Festelektrolyten (4, 5, 6), der zwischen der Messinnenelektrode und der dritten Außenelektrode angeordnet ist, ausgebildet ist;
einen Referenzgasraum (43, 48), in den ein Referenzgas eingeleitet wird; und
eine Referenzelektrode (42), die dem Referenzgasraum zugewandt ausgebildet ist, wobei
der Diffusionswiderstand von dem Gaseinlass (10) zu dem ersten Innenraum (20) 370 /cm oder mehr und 1000 /cm oder weniger beträgt, wobei der Diffusionswiderstand als Wert L/S definiert ist, wobei L für die Länge des Diffusionssteuerteils in Längsrichtung des Sensorelements von dem Einlass (10) zu dem ersten Innenraum steht, und S für die gesamte Querschnittsfläche des Diffusionssteuerteils normal auf die Elementrichtung steht,
wobei der Gassensor Mittel aufweist, die zur Steuerung der elektrochemischen Hauptpumpzelle (21) ausgelegt und angeordnet sind, um den Sauerstoffpartialdruck des ersten Innenraums (20) auf 10⁻¹² atm (1,01325 10⁻⁷ Pa) bis 10⁻³⁰ atm (1,01325 10⁻²⁵ Pa) einzustellen, so dass im Wesentlichen die gesamte Wasserdampfkomponente und die Kohlendioxidkomponente in dem ersten Innenraum zerlegt werden,
wobei der Gassensor Mittel aufweist, die zur Steuerung der ersten elektrochemischen Messpumpzelle (50) ausgelegt und angeordnet sind, um den Sauerstoffpartialdruck des zweiten Innenraums (40) einzustellen, so dass der durch die Zerlegung der Wasserdampfkomponente erzeugte Wasserstoff in dem zweiten Innenraum selektiv brennt und der Sauerstoffpartialdruck des zweiten Innenraums höher als der Sauerstoffpartialdruck des ersten Innenraums ist,
wobei der Gassensor Mittel aufweist, die zur Steuerung der zweiten elektrochemischen Messpumpzelle (47) ausgelegt und angeordnet sind, um den Sauerstoffpartialdruck in der Nähe einer Oberfläche der zweiten Messinnenelektrode (44) einzustellen, so dass durch die Zerlegung der Kohlendioxidkomponente erzeugtes Kohlenmonoxid selektiv in der Nähe der Oberfläche der zweiten Messinnenelektrode brennt und der Sauerstoffpartialdruck in der Nähe der Oberfläche der zweiten Messinnenelektrode höher als der Sauerstoffpartialdruck des zweiten Innenraums ist, und
wobei der Gassensor ausgelegt und angeordnet ist, um
die Konzentration der in dem Messgas enthaltenen Wasserdampfkomponente basierend auf der Höhe eines zwischen der ersten Messinnenelektrode (51) und der zweiten Außenelektrode (23) fließenden Stroms zu identifizieren, wenn die erste elektrochemische Messpumpzelle (50) Sauerstoff in den zweiten Innenraum zuführt, und
die Konzentration der in dem Messgas enthaltenen Kohlendioxidkomponente basierend auf der Höhe eines zwischen der zweiten Messinnenelektrode (44) und der dritten Außenelektrode (23) fließenden Stroms zu identifizieren, wenn die zweite elektrochemische Messpumpzelle (47) Sauerstoff zu der Oberfläche der zweiten Messinnenelektrode zuführt.

2. Gassensor nach Anspruch 1, wobei der Diffusionswiderstand von dem Gaseinlass (10) zu dem ersten Innenraum (20) 680 /cm oder mehr und 1000 /cm oder weniger beträgt.

3. Gassensor nach Anspruch 1 oder 2, wobei der Gassensor ausgelegt und angeordnet ist, um
eine erste zwischen der Hauptinnenelektrode (22) und der ersten Außenelektrode (23) angelegte Spannung einzustellen, um den Sauerstoffpartialdruck des ersten Innenraums (20) einzustellen, so dass im Wesentlichen die gesamte Wasserdampfkomponente und Kohlendioxidkomponente zerlegt werden,
eine zweite zwischen der ersten Messinnenelektrode (51) und der zweiten Außenelektrode (23) angelegte Spannung einzustellen, um den Sauerstoffpartialdruck des zweiten Innenraums (40) einzustellen, so dass der gesamte durch die Zerlegung der Wasserdampfkomponente erzeugte Wasserstoff brennt, und
eine dritte zwischen der zweiten Messinnenelektrode (44) und der dritten Außenelektrode (23) angelegte Spannung einzustellen, um den Sauerstoffpartialdruck auf der Oberfläche der zweiten Messinnenelektrode einzustellen, so dass das gesamte durch die Zerlegung der Kohlendioxidkomponente erzeugte Kohlenmonoxid brennt.

4. Gassensor nach Anspruch 3, der außerdem Folgendes umfasst:
eine erste Sauerstoffpartialdruckdetektion-Sensorzelle (60), die aus der Hauptinnenelektrode (22), der Referenzelektrode (42) und dem Festelektrolyten (3-6), der zwischen der Hauptinnenelektrode und der Referenzelektrode angeordnet ist, ausgebildet ist, wobei die erste Sauerstoffpartialdruckdetektion-Sensorzelle die Höhe der ersten Spannung detektiert;
eine zweite Sauerstoffpartialdruckdetektion-Sensorzelle (61), die aus der ersten Messinnenelektrode (51), der Referenzelektrode (42) und dem Festelektrolyten (3-6), der zwischen der ersten Messinnenelektrode und der Referenzelektrode angeordnet ist, ausgebildet ist, wobei die zweite Sauerstoffpartialdruckdetektion-Sensorzelle die Höhe der zweiten Spannung detektiert; und
eine dritte Sauerstoffpartialdruckdetektion-Sensorzelle (41), die aus der zweiten Messinnenelektrode (44), der Referenzelektrode (42) und dem Festelektrolyten (3-4), der zwischen der zweiten Messinnenelektrode und der Referenzelektrode angeordnet ist, ausgebildet ist, wobei die dritte Sauerstoffpartialdruckdetektion-Sensorzelle die Höhe der dritten Spannung detektiert,
wobei der Gassensor ausgelegt und angeordnet ist, um
den Sauerstoffpartialdruck des ersten Innenraums (20) basierend auf einem Detektionswert der ersten Spannung in der ersten Sauerstoffpartialdruckdetektion-Sensorzelle (60) einzustellen,
den Sauerstoffpartialdruck des zweiten Innenraums (40) basierend auf einem Detektionswert der zweiten Spannung in der zweiten Sauerstoffpartialdruckdetektion-Sensorzelle (61) einzustellen und
den Sauerstoffpartialdruck des zweiten Innenraums (40) basierend auf einem Detektionswert der dritten Spannung in der dritten Sauerstoffpartialdruckdetektion-Sensorzelle (41) einzustellen.

5. Gassensor nach einem der Ansprüche 1 bis 4, wobei der Gassensor ausgelegt und angeordnet ist, um die Konzentration der Wasserdampfkomponente und der Kohlendioxidkomponente zu identifizieren, wenn
der Sauerstoffpartialdruck des zweiten Innenraums auf 10⁻⁵ atm (1,01325 Pa) bis 10-15 atm (1,01325 10⁻¹⁰ Pa) festgelegt ist und
der Sauerstoffpartialdruck auf der Oberfläche der zweiten Messinnenelektrode auf 10⁰ atm (1,01325 10⁵ Pa) bis 10⁻¹⁵ atm (1,01325 10⁻¹⁰ Pa) festgelegt ist.

6. Gassensor nach einem der Ansprüche 1 bis 5, wobei der Gassensor ausgelegt und angeordnet ist, um festzulegen, dass ein Zielsauerstoffpartialdruck in dem ersten Innenraum (20) niedriger wird, wenn der Sauerstoffpartialdruck in dem Messgas höher wird.

7. Gassensor nach einem der Ansprüche 1 bis 6, wobei die zweite Messinnenelektrode (44) auf der Oberfläche des zweiten Innenraums (40) ausgebildet ist.

8. Verfahren zum Messen der Konzentration einer Wasserdampfkomponente und einer Kohlendioxidkomponente eines Messgases mittels eines Gassensors, der ein Sensorelement (101) aufweist, das aus einem Sauerstoffionen-leitenden Festelektrolyten (1-6) ausgebildet ist und die Konzentration der Wasserdampfkomponente und der Kohlendioxidkomponente des Messgases basierend auf einem durch den Festelektrolyten fließenden Strom identifiziert, wobei der Gassensor Folgendes umfasst:
einen Gaseinlass (10), durch den das Messgas aus der Außenumgebung eingeleitet wird;
ein erstes Diffusionssteuerteil (11, 13), das in Kommunikation mit dem Gaseinlass steht und einen ersten Diffusionswiderstand auf das Messgas aufbringt;
einen ersten Innenraum (20), der mit dem ersten Diffusionssteuerteil in Kommunikation steht, in das Messgas mit dem ersten Diffusionswiderstand aus der Außenumgebung eingeleitet wird;
ein zweites Diffusionssteuerteil (30), das in Kommunikation mit dem ersten Innenraum steht und einen zweiten Diffusionswiderstand auf das Messgas aufbringt;
einen zweiten Innenraum (40), der mit dem zweiten Diffusionssteuerteil in Kommunikation steht, in den das Messgas mit dem zweiten Diffusionswiderstand aus dem ersten Innenraum eingeleitet wird;
eine elektrochemische Hauptpumpzelle (21), die aus einer Hauptinnenelektrode (22), die dem ersten Innenraum zugewandt ausgebildet ist, einer ersten Außenelektrode (23), die auf einer Außenfläche des Sensorelements ausgebildet ist, und dem Festelektrolyten (4, 5, 6), der zwischen der Hauptinnenelektrode und der ersten Außenelektrode angeordnet ist, ausgebildet ist;
eine erste elektrochemische Messpumpzelle (50), die aus einer ersten Messinnenelektrode (51), die dem zweiten Innenraum (40) zugewandt ausgebildet ist, einer zweiten Außenelektrode (23), die auf der Außenfläche des Sensorelements ausgebildet ist, und dem Festelektrolyten (4, 5, 6), der zwischen der ersten Messinnenelektrode und der zweiten Außenelektrode angeordnet ist, ausgebildet ist;
eine zweite elektrochemische Messpumpzelle (47), die aus einer zweiten Messinnenelektrode (44), die an einer Position in dem zweiten Innenraum ausgebildet ist, die sich weiter von dem zweiten Diffusionssteuerteil (30) entfernt befindet als die Position der ersten Messinnenelektrode (51), einer dritten Außenelektrode (23), die auf der Außenfläche des Sensorelements ausgebildet ist, und dem Festelektrolyten (4, 5, 6), der zwischen der Messinnenelektrode und der dritten Außenelektrode angeordnet ist, ausgebildet ist;
einen Referenzgasraum (43, 48), in den ein Referenzgas eingeleitet wird; und
eine Referenzelektrode (42), die dem Referenzgasraum zugewandt ausgebildet ist, wobei
der Diffusionswiderstand von dem Gaseinlass (10) zu dem ersten Innenraum (20) 370 /cm oder mehr und 1000 /cm oder weniger beträgt, wobei der Diffusionswiderstand als Wert L/S definiert ist, wobei L für die Länge des Diffusionssteuerteils in Längsrichtung des Sensorelements von dem Einlass (10) zu dem ersten Innenraum steht, und S für die gesamte Querschnittsfläche des Diffusionssteuerteils normal auf die Elementrichtung steht,
wobei das Verfahren die folgenden Schritte umfasst:
das Steuern der elektrochemischen Hauptpumpzelle (21), um den Sauerstoffpartialdruck des ersten Innenraums (20) auf 10⁻¹² atm (1,01325 10⁻⁷ Pa) bis 10⁻³⁰ atm (1,01325 10⁻²⁵ Pa) einzustellen, so dass im Wesentlichen die gesamte Wasserdampfkomponente und die Kohlendioxidkomponente in dem ersten Innenraum zerlegt werden,
das Steuern der ersten elektrochemischen Messpumpzelle (50), um den Sauerstoffpartialdruck des zweiten Innenraums (40) einzustellen, so dass der durch die Zerlegung der Wasserdampfkomponente erzeugte Wasserstoff in dem zweiten Innenraum selektiv brennt und der Sauerstoffpartialdruck des zweiten Innenraums höher als der Sauerstoffpartialdruck des ersten Innenraums ist,
das Steuern der zweiten elektrochemischen Messpumpzelle (47), um den Sauerstoffpartialdruck in der Nähe einer Oberfläche der zweiten Messinnenelektrode (44) einzustellen, so dass durch die Zerlegung der Kohlendioxidkomponente erzeugtes Kohlenmonoxid selektiv in der Nähe der Oberfläche der zweiten Messinnenelektrode brennt und der Sauerstoffpartialdruck in der Nähe der Oberfläche der zweiten Messinnenelektrode höher als der Sauerstoffpartialdruck des zweiten Innenraums ist, und
das Identifizieren der Konzentration der in dem Messgas enthaltenen Wasserdampfkomponente basierend auf der Höhe eines zwischen der ersten Messinnenelektrode (51) und der zweiten Außenelektrode (23) fließenden Stroms, wenn die erste elektrochemische Messpumpzelle (50) Sauerstoff in den zweiten Innenraum zuführt, und
das Identifizieren der Konzentration der in dem Messgas enthaltenen Kohlendioxidkomponente basierend auf der Höhe eines zwischen der zweiten Messinnenelektrode (44) und der dritten Außenelektrode (23) fließenden Stroms, wenn die zweite elektrochemische Messpumpzelle (47) Sauerstoff zu der Oberfläche der zweiten Messinnenelektrode zuführt.

9. Verfahren nach Anspruch 8, wobei der Diffusionswiderstand von dem Gaseinlass (10) zu dem ersten Innenraum (20) 680 /cm oder mehr und 1000 /cm oder weniger beträgt.

10. Verfahren nach Anspruch 8 oder 9, das Folgendes umfasst:
das Einstellen einer ersten zwischen der Hauptinnenelektrode (22) und der ersten Außenelektrode (23) angelegte Spannung, um den Sauerstoffpartialdruck des ersten Innenraums (20) einzustellen, so dass im Wesentlichen die gesamte Wasserdampfkomponente und Kohlendioxidkomponente zerlegt werden,
das Einstellen einer zweiten zwischen der ersten Messinnenelektrode (51) und der zweiten Außenelektrode (23) angelegte Spannung, um den Sauerstoffpartialdruck des zweiten Innenraums (40) einzustellen, so dass der gesamte durch die Zerlegung der Wasserdampfkomponente erzeugte Wasserstoff brennt, und
das Einstellen einer dritten zwischen der zweiten Messinnenelektrode (44) und der dritten Außenelektrode (23) angelegte Spannung, um den Sauerstoffpartialdruck auf der Oberfläche der zweiten Messinnenelektrode einzustellen, so dass das gesamte durch die Zerlegung der Kohlendioxidkomponente erzeugte Kohlenmonoxid brennt.

11. Verfahren nach Anspruch 10, wobei der Gassensor außerdem Folgendes umfasst:
eine erste Sauerstoffpartialdruckdetektion-Sensorzelle (60), die aus der Hauptinnenelektrode (22), der Referenzelektrode (42) und dem Festelektrolyten (3-6), der zwischen der Hauptinnenelektrode und der Referenzelektrode angeordnet ist, ausgebildet ist, wobei die erste Sauerstoffpartialdruckdetektion-Sensorzelle die Höhe der ersten Spannung detektiert;
eine zweite Sauerstoffpartialdruckdetektion-Sensorzelle (61), die aus der ersten Messinnenelektrode (51), der Referenzelektrode (42) und dem Festelektrolyten (3-6), der zwischen der ersten Messinnenelektrode und der Referenzelektrode angeordnet ist, ausgebildet ist, wobei die zweite Sauerstoffpartialdruckdetektion-Sensorzelle die Höhe der zweiten Spannung detektiert; und
eine dritte Sauerstoffpartialdruckdetektion-Sensorzelle (41), die aus der zweiten Messinnenelektrode (44), der Referenzelektrode (42) und dem Festelektrolyten (3, 4), der zwischen der zweiten Messinnenelektrode und der Referenzelektrode angeordnet ist, ausgebildet ist, wobei die dritte Sauerstoffpartialdruckdetektion-Sensorzelle die Höhe der dritten Spannung detektiert,
wobei das Verfahren die folgenden Schritte umfasst:
das Einstellen des Sauerstoffpartialdrucks des ersten Innenraums (20) basierend auf einem Detektionswert der ersten Spannung in der ersten Sauerstoffpartialdruckdetektion-Sensorzelle (60),
das Einstellen des Sauerstoffpartialdrucks des zweiten Innenraums (40) basierend auf einem Detektionswert der zweiten Spannung in der zweiten Sauerstoffpartialdruckdetektion-Sensorzelle (61) und
das Einstellen des Sauerstoffpartialdrucks des zweiten Innenraums (40) basierend auf einem Detektionswert der dritten Spannung in der dritten Sauerstoffpartialdruckdetektion-Sensorzelle (41).

12. Verfahren nach einem der Ansprüche 8 bis 11, wobei die Konzentration der Wasserdampfkomponente und der Kohlendioxidkomponente identifiziert werden, wenn
der Sauerstoffpartialdruck des zweiten Innenraums auf 10⁻⁵ atm (1,01325 Pa) bis 10⁻¹⁵ atm (1,01325 10⁻¹⁰ Pa) festgelegt ist und
der Sauerstoffpartialdruck auf der Oberfläche der zweiten Messinnenelektrode auf 10⁰ atm (1,01325 10⁵ Pa) bis 10⁻¹⁵ atm (1,01325 10⁻¹⁰ Pa) festgelegt ist.

13. Verfahren nach einem der Ansprüche 8 bis 12, wobei festgelegt wird, dass ein Zielsauerstoffpartialdruck in dem ersten Innenraum (20) niedriger wird, wenn der Sauerstoffpartialdruck in dem Messgas höher wird.

14. Gassensor nach einem der Ansprüche 8 bis 13, wobei die zweite Messinnenelektrode (44) auf der Oberfläche des zweiten Innenraums (40) ausgebildet ist.

## Revendications

1. Capteur de gaz qui comprend un élément de capteur (101) constitué d'un électrolyte solide conducteur à ions oxygène (1 - 6) et qui identifie des concentrations d'une part de vapeur d'eau et d'une part de dioxyde de carbone d'un gaz de mesure sur la base d'un courant circulant à travers ledit électrolyte solide, ledit capteur de gaz comprenant :
une entrée de gaz (10) à travers laquelle ledit gaz de mesure est introduit de l'extérieur ;
une première partie de contrôle de diffusion (11, 13) qui est en communication avec ladite entrée de gaz et applique une première résistance à la diffusion audit gaz de mesure ;
un premier espace interne (20) qui est en communication avec ladite première partie de contrôle de diffusion dans laquelle le gaz de mesure est introduit avec ladite première résistance à la diffusion de l'extérieur ;
une deuxième partie de contrôle de diffusion (30) qui est en communication avec ledit premier espace interne et applique une deuxième résistance à la diffusion audit gaz de mesure ;
un deuxième espace interne (40) qui est en communication avec ladite deuxième partie de contrôle de diffusion dans laquelle le gaz de mesure est introduit avec ladite deuxième résistance à la diffusion à partir dudit premier espace interne ;
une cellule de pompage électrochimique principale (21) constituée d'une électrode interne principale (22) formée de façon à faire face audit premier espace interne, d'une première électrode externe (23) formée sur une surface externe dudit élément de capteur et dudit électrolyte solide (4, 5, 6) situé entre ladite électrode interne principale et ladite première électrode externe ;
une première cellule de pompage électrochimique de mesure (50) constituée d'une première électrode interne de mesure (51) formée de façon à faire face audit deuxième espace interne (40), d'une deuxième électrode externe (23) formée sur la surface externe dudit élément de capteur et dudit électrolyte solide (4, 5, 6) situé entre ladite première électrode interne de mesure et ladite deuxième électrode externe ;
une deuxième cellule de pompage électrochimique de mesure (47) constituée d'une deuxième électrode interne de mesure (44) formée à une position dans ledit deuxième espace interne qui est plus éloignée de ladite deuxième partie de contrôle de diffusion (30) que la position de ladite première électrode interne de mesure (51), d'une troisième électrode externe (23) formée sur la surface externe dudit élément de capteur, et dudit électrolyte solide (4, 5, 6) situé entre ladite deuxième électrode interne de mesure et ledit troisième électrode externe ;
un espace de gaz de référence (43, 48) dans lequel un gaz de référence est introduit ; et
une électrode de référence (42) formée de façon à faire face audit espace de gaz de référence, dans lequel la résistance à la diffusion de ladite entrée de gaz (10) vers ledit premier espace interne (20) est de 370 /cm ou plus et de 1000 cm ou moins, la résistance à la diffusion étant définie comme une valeur L/S, où L représente la longueur de la partie de contrôle dans la direction longitudinale de l'élément de capteur de l'entrée (10) vers le premier espace interne et S représente la surface de section transversale totale de la partie de contrôle de diffusion perpendiculairement à la direction de l'élément,
le capteur de gaz comprend des moyens conçus et disposés pour contrôler ladite cellule de pompage électrochimique principale (21) de façon à ajuster la pression partielle d'oxygène dudit premier espace interne (20) à 10⁻¹² atm (1, 01325.10⁻⁷ Pa) à 10⁻³⁰ atm (1, 01325.10⁻²⁵ Pa), afin que globalement toute ladite part de vapeur d'eau et toute ladite part de dioxyde de carbone soient décomposées dans ledit premier espace interne,
le capteur de gaz comprend des moyens conçus et disposés pour contrôler la première cellule de pompage électrochimique de mesure (50) de façon à ajuster la pression partielle d'oxygène dudit deuxième espace interne (40) afin que l'hydrogène généré par la décomposition de ladite part de vapeur d'eau brûle sélectivement dans ledit deuxième espace interne et afin que ladite pression partielle d'oxygène dudit deuxième espace interne soit plus élevée que la pression partielle d'oxygène dudit premier espace interne,
le capteur de gaz comprend des moyens conçus et disposés pour contrôler la deuxième cellule de pompage électrochimique de mesure (47) de façon à ajuster la pression partielle d'oxygène près d'une surface de ladite deuxième électrode interne de mesure (44) afin que le monoxyde de carbone généré par la décomposition de ladite part de dioxyde de carbone brûle sélectivement près de la surface de ladite deuxième électrode interne de mesure et afin que ladite pression partielle d'oxygène près de la surface de ladite deuxième électrode interne de mesure soit plus élevée que la pression partielle d'oxygène dudit deuxième espace interne et
ledit capteur de gaz est conçu et disposé pour
identifier la concentration de ladite part de vapeur d'eau contenue dans ledit gaz de mesure sur la base de l'amplitude d'un courant circulant entre ladite première électrode interne de mesure (51) et ladite deuxième électrode externe (23) lorsque ladite première cellule de pompage électrochimique de mesure (50) alimente en oxygène ledit deuxième espace interne et
identifier la concentration de ladite part de dioxyde de carbone contenue dans ledit gaz de mesure sur la base de l'amplitude d'un courant circulant entre ladite deuxième électrode interne de mesure (44) et ladite troisième électrode externe (23) lorsque ladite deuxième cellule de pompage électrochimique de mesure (47) alimente en oxygène la surface de ladite deuxième électrode interne de mesure.

2. Capteur de gaz selon la revendication 1, dans lequel la résistance à la diffusion de ladite entrée de gaz (10) vers ledit premier espace interne (20) est de 680 /cm ou plus et de 1000 /cm ou moins.

3. Capteur de gaz selon la revendication 1 ou 2, dans lequel ledit capteur de gaz est conçu et disposé pour
ajuster une première tension entre ladite première électrode interne principale (22) et ladite première électrode externe (23) pour ajuster la pression partielle d'oxygène dudit premier espace interne (20) afin que globalement toute ladite part de vapeur d'eau et toute ladite part de dioxyde de carbone soient décomposées,
ajuster une deuxième tension appliquée entre ladite première électrode interne de mesure (51) et ladite deuxième électrode externe (23) pour ajuster la pression partielle d'oxygène dudit deuxième espace interne (40) afin que tout l'hydrogène généré par la décomposition de ladite part de vapeur brûle et
ajuster une troisième tension appliquée entre ladite deuxième électrode interne de mesure (44) et ladite troisième électrode externe (23) pour ajuster la pression partielle d'oxygène sur la surface de ladite deuxième électrode interne de mesure de façon à ce que tout le monoxyde de carbone généré par la décomposition de ladite part de dioxyde de carbone brûle.

4. Capteur de gaz selon la revendication 3, comprenant en outre :
une première cellule de capteur de détection de pression partielle d'oxygène (60) constituée de ladite électrode interne principale (22), de ladite électrode de référence (42) et dudit électrolyte solide (3 - 6) situé entre ladite électrode interne principale et ladite électrode de référence, ladite première cellule de détection de pression partielle d'oxygène détectant l'amplitude de ladite première tension ;
une deuxième cellule de capteur de détection de pression partielle d'oxygène (61) constituée de ladite première électrode interne de mesure (51), de ladite électrode de référence (42) et dudit électrolyte solide (3 - 6) situé entre ladite première électrode interne de mesure et ladite électrode de référence, ladite deuxième cellule de détection de pression partielle d'oxygène détectant l'amplitude de ladite deuxième tension ; et
une troisième cellule de capteur de détection de pression partielle d'oxygène (41) constituée de ladite deuxième électrode interne de mesure (44), de ladite électrode de référence (42) et dudit électrolyte solide (3 - 6) situé entre ladite deuxième électrode interne de mesure et ladite électrode de référence, ladite troisième cellule de détection de pression partielle d'oxygène détectant l'amplitude de ladite troisième tension,
dans lequel ledit capteur de gaz est conçu et disposé pour
ajuster la pression partielle d'oxygène dudit premier espace interne (20) sur la base d'une valeur de détection de ladite première tension dans ladite première cellule de capteur de détection de pression partielle d'oxygène (60),
ajuster la pression partielle d'oxygène dudit deuxième espace interne (40) sur la base d'une valeur de détection de ladite deuxième tension dans ladite deuxième cellule de capteur de détection de pression partielle d'oxygène (61),
ajuster la pression partielle d'oxygène dudit deuxième espace interne (40) sur la base d'une valeur de détection de ladite troisième tension dans ladite troisième cellule de capteur de détection de pression partielle d'oxygène (41).

5. Capteur de gaz selon l'une des revendications 1 à 4, dans lequel ledit capteur de gaz est conçu et disposé pour identifier les concentrations de ladite part de vapeur d'eau et de ladite part de dioxyde de carbone avec
la pression partielle d'oxygène dudit deuxième espace interne ajustée de 10⁻⁵ atm (1,01325 Pa) à 10⁻¹⁵ atm (1,01325.10⁻¹⁰ Pa),
la pression partielle d'oxygène sur la surface de ladite deuxième électrode interne de mesure ajustée de 10° atm (1,01325.10⁵ Pa) à 10⁻¹⁵ atm (1,01325.10⁻¹⁰ Pa).

6. Capteur de gaz selon l'une des revendications 1 à 5, dans lequel ledit capteur de gaz est conçu et disposé pour ajuster une pression partielle d'oxygène cible dans ledit premier espace interne (20) afin qu'elle diminue lorsque la pression partielle d'oxygène dans ledit gaz de mesure augmente.

7. Capteur de gaz selon l'une des revendications 1 à 6, dans lequel ladite deuxième électrode interne de mesure (44) est formée sur la surface dudit deuxième espace interne (40).

8. Procédé de mesure de concentrations d'une part de vapeur d'eau et d'une part de dioxyde de carbone d'un gaz de mesure, au moyen d'un capteur de gaz qui comprend un élément de capteur (101) constitué d'un électrolyte solide conducteur à ions oxygène (1 - 6) et qui identifie des concentrations d'une part de vapeur d'eau et d'une part de dioxyde de carbone d'un gaz de mesure sur la base d'un courant circulant à travers ledit électrolyte solide, ledit capteur de gaz comprenant :
une entrée de gaz (10) à travers laquelle ledit gaz de mesure est introduit de l'extérieur ;
une première partie de contrôle de diffusion (11, 13) qui est en communication avec ladite entrée de gaz et applique une première résistance à la diffusion audit gaz de mesure ;
un premier espace interne (20) qui est en communication avec ladite première partie de contrôle de diffusion dans laquelle le gaz de mesure est introduit avec ladite première résistance à la diffusion de l'extérieur ;
une deuxième partie de contrôle de diffusion (30) qui est en communication avec ledit premier espace interne et applique une deuxième résistance à la diffusion audit gaz de mesure ;
un deuxième espace interne (40) qui est en communication avec ladite deuxième partie de contrôle de diffusion dans laquelle le gaz de mesure est introduit avec ladite deuxième résistance à la diffusion à partir dudit premier espace interne ;
une cellule de pompage électrochimique principale (21) constituée d'une électrode interne principale (22) formée de façon à faire face audit premier espace interne, d'une première électrode externe (23) formée sur une surface externe dudit élément de capteur et dudit électrolyte solide (4, 5, 6) situé entre ladite électrode interne principale et ladite première électrode externe ;
une première cellule de pompage électrochimique de mesure (50) constituée d'une première électrode interne de mesure (51) formée de façon à faire face audit deuxième espace interne (40), d'une deuxième électrode externe (23) formée sur la surface externe dudit élément de capteur et dudit électrolyte solide (4, 5, 6) situé entre ladite première électrode interne de mesure et ladite deuxième électrode externe ;
une deuxième cellule de pompage électrochimique de mesure (47) constituée d'une deuxième électrode interne de mesure (44) formée à une position dans ledit deuxième espace interne qui est plus éloignée de ladite deuxième partie de contrôle de diffusion (30) que la position de ladite première électrode interne de mesure (51), d'une troisième électrode externe (23) formée sur la surface externe dudit élément de capteur, et dudit électrolyte solide (4, 5, 6) situé entre ladite deuxième électrode interne de mesure et ledit troisième électrode externe ;
un espace de gaz de référence (43, 48) dans lequel un gaz de référence est introduit ; et
une électrode de référence (42) formée de façon à faire face audit espace de gaz de référence, dans lequel la résistance à la diffusion de ladite entrée de gaz (10) vers ledit premier espace interne (20) est de 370 /cm ou plus et de 1000 cm ou moins, la résistance à la diffusion étant définie comme une valeur L/S, où L représente la longueur de la partie de contrôle dans la direction longitudinale de l'élément de capteur de l'entrée (10) vers le premier espace interne et S représente la surface de section transversale totale de la partie de contrôle de diffusion perpendiculairement à la direction de l'élément,
ce procédé comprenant les étapes suivantes :
contrôle de ladite cellule de pompage électrochimique principale (21) de façon à ajuster la pression partielle d'oxygène dudit premier espace interne (20) à 10⁻¹² atm (1,01325.10⁻⁷ Pa) à 10⁻³⁰ atm (1,01325.10⁻²⁵ Pa), afin que globalement toute ladite part de vapeur d'eau et toute ladite part de dioxyde de carbone soient décomposées dans ledit premier espace interne,
contrôle de ladite première cellule de pompage électrochimique de mesure (50) de façon à ajuster la pression partielle d'oxygène dudit deuxième espace interne (40) afin que l'hydrogène généré par la décomposition de ladite part de vapeur d'eau brûle sélectivement dans ledit deuxième espace interne et afin que ladite pression partielle d'oxygène dudit deuxième espace interne soit plus élevée que la pression partielle d'oxygène dudit premier espace interne,
contrôle de ladite deuxième cellule de pompage électrochimique de mesure (47) de façon à ajuster la pression partielle d'oxygène près d'une surface de ladite deuxième électrode interne de mesure (44) afin que le monoxyde de carbone généré par la décomposition de ladite part de dioxyde de carbone brûle sélectivement près de la surface de ladite deuxième électrode interne de mesure et afin que ladite pression partielle d'oxygène près de la surface de ladite deuxième électrode interne de mesure soit plus élevée que la pression partielle d'oxygène dudit deuxième espace interne et
identification de la concentration de ladite part de vapeur d'eau contenue dans ledit gaz de mesure sur la base de l'amplitude d'un courant circulant entre ladite première électrode interne de mesure (51) et ladite deuxième électrode externe (23) lorsque ladite première cellule de pompage électrochimique de mesure (50) alimente en oxygène ledit deuxième espace interne et
identification de la concentration de ladite part de dioxyde de carbone contenue dans ledit gaz de mesure sur la base de l'amplitude d'un courant circulant entre ladite deuxième électrode interne de mesure (44) et ladite troisième électrode externe (23) lorsque ladite deuxième cellule de pompage électrochimique de mesure (47) alimente en oxygène la surface de ladite deuxième électrode interne de mesure.

9. Procédé selon la revendication 8, dans lequel la résistance à la diffusion de ladite entrée de gaz (10) vers ledit premier espace interne (20) est de 680 /cm ou plus et de 1000 /cm ou moins.

10. Procédé selon la revendication 8 ou 9, comprenant :
l'ajustement d'une première tension entre ladite première électrode interne principale (22) et ladite première électrode externe (23) pour ajuster la pression partielle d'oxygène dudit premier espace interne (20) afin que globalement toute ladite part de vapeur d'eau et toute ladite part de dioxyde de carbone soient décomposées,
l'ajustement d'une deuxième tension appliquée entre ladite première électrode interne de mesure (51) et ladite deuxième électrode externe (23) pour ajuster la pression partielle d'oxygène dudit deuxième espace interne (40) afin que tout l'hydrogène généré par la décomposition de ladite part de vapeur brûle et
l'ajustement d'une troisième tension appliquée entre ladite deuxième électrode interne de mesure (44) et ladite troisième électrode externe (23) pour ajuster la pression partielle d'oxygène sur la surface de ladite deuxième électrode interne de mesure de façon à ce que tout le monoxyde de carbone généré par la décomposition de ladite part de dioxyde de carbone brûle.

11. Procédé selon la revendication 10, dans lequel le capteur de gaz comprend en outre :
une première cellule de capteur de détection de pression partielle d'oxygène (60) constituée de ladite électrode interne principale (22), de ladite électrode de référence (42) et dudit électrolyte solide (3 - 6) situé entre ladite électrode interne principale et ladite électrode de référence, ladite première cellule de détection de pression partielle d'oxygène détectant l'amplitude de ladite première tension ;
une deuxième cellule de capteur de détection de pression partielle d'oxygène (61) constituée de ladite première électrode interne de mesure (51), de ladite électrode de référence (42) et dudit électrolyte solide (3 - 6) situé entre ladite première électrode interne de mesure et ladite électrode de référence, ladite deuxième cellule de détection de pression partielle d'oxygène détectant l'amplitude de ladite deuxième tension ; et
une troisième cellule de capteur de détection de pression partielle d'oxygène (41) constituée de ladite deuxième électrode interne de mesure (44), de ladite électrode de référence (42) et dudit électrolyte solide (3 - 4) situé entre ladite deuxième électrode interne de mesure et ladite électrode de référence, ladite troisième cellule de détection de pression partielle d'oxygène détectant l'amplitude de ladite troisième tension,
ce procédé comprenant les étapes suivantes :
ajustement de la pression partielle d'oxygène dudit premier espace interne (20) sur la base d'une valeur de détection de ladite première tension dans ladite première cellule de capteur de détection de pression partielle d'oxygène (60),
ajustement de la pression partielle d'oxygène dudit deuxième espace interne (40) sur la base d'une valeur de détection de ladite deuxième tension dans ladite deuxième cellule de capteur de détection de pression partielle d'oxygène (61),
ajustement de la pression partielle d'oxygène dudit deuxième espace interne (40) sur la base d'une valeur de détection de ladite troisième tension dans ladite troisième cellule de capteur de détection de pression partielle d'oxygène (41).

12. Procédé selon l'une des revendications 8 à 11, dans lequel les concentrations de ladite part de vapeur d'eau et de ladite part de dioxyde de carbone sont identifiées avec
la pression partielle d'oxygène dudit deuxième espace interne ajustée de 10⁻⁵ atm (1,01325 Pa) à 10⁻¹⁵ atm (1,01325.10⁻¹⁰ Pa),
la pression partielle d'oxygène sur la surface de ladite deuxième électrode interne de mesure ajustée de 10° atm (1,01325.10⁵ Pa) à 10⁻¹⁵ atm (1,01325.10⁻¹⁰ Pa).

13. Procédé selon l'une des revendications 8 à 12, dans lequel une pression partielle d'oxygène cible dans ledit premier espace interne (20) est ajustée afin qu'elle diminue lorsque la pression partielle d'oxygène dans ledit gaz de mesure augmente.

14. Procédé selon l'une des revendications 8 à 13, dans lequel ladite deuxième électrode interne de mesure (44) est formée sur la surface dudit deuxième espace interne (40).
